# EUROPÄISCHE PATENTSCHRIFT

(11) **EP 4 284 010 B1**
(45) Veröffentlichungstag und Bekanntmachung des Hinweises auf die Patenterteilung: **24.09.2025**
(21) Anmeldenummer: 23202996.7
(22) Anmeldetag: 06.10.2022
(51) Int. Cl.: H04N 23/60

(54) **HINTERGRUND-WIEDERGABEEINRICHTUNG, KAMERA UND VERFAHREN ZUM WIEDERGEBEN EINER DARSTELLUNG EINES VIRTUELLEN HINTERGRUNDS**
BACKGROUND REPRODUCTION DEVICE, CAMERA, AND METHOD FOR REPRODUCING A REPRESENTATION OF A VIRTUAL BACKGROUND
DISPOSITIF DE REPRODUCTION D'ARRIÈRE-PLAN, CAMÉRA ET PROCÉDÉ DE REPRODUCTION D'UNE REPRÉSENTATION D'UN ARRIÈRE-PLAN VIRTUEL

(30) Priorität: 11.10.2021 DE 102021126309
(43) Veröffentlichungstag der Anmeldung: 29.11.2023
(62) Teilanmeldung aus: 22200067.1
(73) Patentinhaber: Arnold & Richter Cine Technik GmbH & Co. Betriebs KG, 80807 München (DE)
(72) Erfinder: POPP, Hermann, 81547 München (DE)
(74) Vertreter: Manitz Finsterwald Patent- und Rechtsanwaltspartnerschaft mbB

(56) Entgegenhaltungen:
- WO-A1-2020/053416
- JP-A- 2003 298 936
- JP-A- 2005 268 838
- US-A1- 2015 348 326
- US-A1- 2020 145 644
- ANONYMOUS: "The DARK BAYVirtual Production Stage was built to provide film and television series productions with a", ARRI, 10 June 2021 (2021-06-10), pages 1 - 10, XP055974820, Retrieved from the Internet <URL:https://www.arri.com/news-en/arri-supported-the-creation-of-the-dark-bay-virtual-production-stage> [retrieved on 20221026]

## Beschreibung

Die Erfindung betrifft eine Hintergrund-Wiedergabeeinrichtung für ein virtuelles Bildaufnahmestudio, welche dazu ausgebildet ist, hinter einem realen Motiv eine Darstellung eines virtuellen Hintergrunds für eine Kameraaufnahme wiederzugeben.

Ferner betrifft die Erfindung eine Kamera für eine Aufnahme einer solchen Darstellung eines virtuellen Hintergrunds sowie Verfahren zum Wiedergeben einer Darstellung eines virtuellen Hintergrunds mittels einer Hintergrund-Wiedergabeeinrichtung für eine Aufnahme mit einer zugeordneten Kamera in einem virtuellen Bildaufnahmestudio.

Hintergrund-Wiedergabeeinrichtungen können insbesondere dazu vorgesehen sein, in einem Bildaufnahmestudio eine Landschaft oder eine Umgebung wiederzugeben, in welcher eine Aufnahme mittels einer zugeordneten Kamera erfolgen soll und welche einen virtuellen Hintergrund für eine aufzunehmende Szene bildet. Dabei kann es sich bei dem Bildaufnahmestudio beispielsweise um ein Filmstudio zum Aufnehmen von Bewegtbildsequenzen oder um ein Fotostudio handeln, in welchem Einzelbilder bzw. Stillbilder aufgenommen werden. Generell kann eine derartige Aufnahme ein lokales Speichern von Bilddaten oder eine Übertragung an einen entfernten Ort (z.B. Broadcast, Streaming) umfassen. In dem virtuellen Bildaufnahmestudio kann somit ein virtueller Hintergrund bzw. eine virtuelle Umgebung geschaffen werden, in welcher sich ein Schauspieler während einer Bewegtbildaufnahme bewegen oder welche einen Hintergrund für eine Stillbildaufnahme bilden kann. Der im vorliegenden Zusammenhang genannte virtuelle Hintergrund umfasst also Bildinformation, die ein Hintergrundmotiv repräsentiert und die von einer zugeordneten Kamera als scheinbar reale Umgebung einer (Vordergrund-)Szene unmittelbar aufgenommen werden kann. Die Darstellung des virtuellen Hintergrunds "hinter" einem realen Motiv ist in diesem Zusammenhang umfassend zu verstehen, da die virtuelle Umgebung auch oberhalb oder unterhalb des realen Motivs vorgesehen sein kann.

Beispielsweise bei Bewegtbildaufnahmen kann eine Hintergrund-Wiedergabeeinrichtung zum Wiedergeben einer Darstellung eines virtuellen Hintergrunds zum Einsatz kommen, um eine Szene unmittelbar in der vorgesehenen Umgebung aufnehmen zu können. Insbesondere kann dadurch das Schauspiel erleichtert werden, da etwaige in dem virtuellen Hintergrund ablaufende Ereignisse von einem Schauspieler wahrgenommen werden können und der Schauspieler auf diese Ereignisse reagieren kann. Anders als beispielsweise bei der Verwendung eines Green-Screen, bei welchem die Umgebung für den Schauspieler nicht sichtbar ist, kann der Schauspieler sein Schauspiel somit an etwaige Hintergrundgeschehnisse anpassen und ein Regisseur, eine Kameraperson oder sonstige an einem Dreh beteiligte Personen kann bzw. können bereits während des Drehs einen Gesamteindruck der Szene gewinnen und die Szene beurteilen. Zudem können die gesamte Szene oder ein entsprechender Ausschnitt eines Films unmittelbar nach der Aufnahme angesehen und überprüft werden, ohne dass der für die Szene vorgesehene Hintergrund noch überlagert werden muss.

Bei Stillbildaufnahmen kann eine derartige Hintergrund-Wiedergabeeinrichtung beispielsweise dazu genutzt werden, in einem Bildaufnahmestudio und somit in einem kontrollierbaren Umfeld Fotografien in grundsätzlich beliebigen Umgebungen aufnehmen zu können und während des Fotografierens das entstehende Bild vollständig im Blick zu haben. Der Hintergrund und das reale Motiv bzw. eine zu fotografierende Person können somit optimal aufeinander abgestimmt werden bzw. zusammenwirken. Zudem kann das aufgenommene Foto unmittelbar angesehen werden, um gegebenenfalls erforderliche Anpassungen vornehmen zu können.

Aus WO 2020/053416 A1 ist ferner ein LED-Display bekannt, welches als eine Werbetafel für Sportveranstaltungen eingesetzt wird. Dabei wird das LED-Display derart angesteuert, dass mittels einer aufnehmenden Videokamera verschiedene Video Outputs mit verschiedenen Werbebotschaften generiert werden können, wohingegen die Sportveranstaltung vor Ort verfolgende Zuschauer stets dieselbe Darstellung an dem LED-Display sehen. Zudem ist beschrieben, bei einer die Werbetafel fotografierenden Kamera ein Shuttersignal in Abhängigkeit von der Ansteuerung des LED-Displays zu verschieben, so dass in einer Serienaufnahme stets ein jeweiliger zu einem der verschiedenen Video Outputs gehörender Bildinhalt abgebildet werden kann. US 2015/0348326 A1, US 2020/0145644 A1, JP 2008-097191 A und JP 2005-268838 A offenbaren die Synchronisation zwischen Kameras und Hintergrundanzeigevorrichtungen in virtuellen Studios.

Zum Wiedergeben der Darstellung des virtuellen Hintergrunds können Hintergrund-Wiedergabeeinrichtungen insbesondere ein elektronisches Display mit einer aktiven Pixelmatrix bilden oder aufweisen und beispielsweise eine aktive Beleuchtungseinrichtung mit einer Vielzahl von Leuchtelementen umfassen. Beispielsweise kann zur Wiedergabe einer Darstellung eines virtuellen Hintergrunds in einem virtuellen Bildaufnahmestudio eine LED-Wand zum Einsatz kommen, deren Leuchtdioden individuell und/oder in Gruppen benachbarter Leuchtdioden bzw. in Arrays von Leuchtdioden ansteuerbar sein können. Leuchtdioden einer solchen LED-Wand können als beispielsweise als LED (Light Emitting Diode) oder als OLED (Organic Light Emitting Diode bzw. organische Leuchtdiode) vorgesehen sein. Ferner können die Leuchtdioden Teil einer Flüssigkristallanzeige sein. Derartige Hintergrund-Wiedergabeeinrichtungen können sich beispielsweise über eine Breite von mindestens 5 m und eine Höhe von mindestens 2 m erstrecken, um mehrere Schauspieler vor einem gemeinsamen (virtuellen) Hintergrund aufnehmen zu können.

Darüber hinaus können Hintergrund-Wiedergabeeinrichtungen mehrere Paneele umfassen, an welchen die Bildpunktelemente angeordnet sind und welche gemeinsam die LED-Wand bilden. Während die Paneele, für welche auch der Begriff Panel geläufig ist, im Wesentlichen zweidimensional ausgebildet sein und sich die an einem Paneel angeordneten Bildpunktelemente in einer flächigen Anordnung erstrecken können, kann durch eine geeignete Anordnung mehrerer Paneele beispielsweise erreicht werden, dass die Hintergrund-Wiedergabeeinrichtung abschnittsweise gekrümmt und/oder gewölbt ausgebildet ist. Dadurch kann die Hintergrund-Wiedergabeeinrichtung beispielsweise sowohl hinter als auch über oder unter dem realen Motiv in dem virtuellen Bildaufnahmestudio angeordnet werden, um auch das unmittelbare Aufnehmen einer Darstellung eines virtuellen Himmels, oder einer virtuellen Decke eines Raums oder eines virtuellen Bodens in dem Bildaufnahmestudio zu ermöglichen. Alternativ zu einer LED-Wand kann eine Darstellung eines virtuellen Hintergrunds grundsätzlich auch durch Lichtpunkte erzeugt werden, die durch Reflektion oder Transmission an einer Lichtquellen-Wand, beispielsweise einer Leinwand für eine Rückprojektion, erzeugt werden. Die aktive Lichterzeugung kann dazu durch einen Projektor erfolgen, wobei an der Leinwand die Lichtquellen lediglich indirekt gebildet sind.

Insbesondere kann es eine derartige Hintergrund-Wiedergabeeinrichtung ermöglichen, durch entsprechendes Ansteuern der Bildpunktelemente einen virtuellen Hintergrund, der insbesondere eine dreidimensionale Szene repräsentieren kann, bildlich dazustellen und/oder durch Verändern der Ansteuerung während einer Aufnahme anzupassen. Eine Hintergrund-Wiedergabeeinrichtung bietet somit eine Möglichkeit, einen virtuellen Hintergrund für eine aufzunehmende Szene lebendig und leicht anpassbar darzustellen und dadurch insbesondere das Schauspiel oder die Gestik zu erleichtern.

Zum Aufnehmen einer Bewegtbildsequenz in dem virtuellen Bildaufnahmestudio kann die Kamera beispielsweise eine Abfolge oder Sequenz von Abbildungen der Darstellung des virtuellen Hintergrunds erzeugen, wobei die Kamera die Abbildungen insbesondere mit einer vorgegebenen oder einstellbaren Bildaufnahmefrequenz bzw. Frame-Rate aufnehmen kann. Ebenso kann die Hintergrund-Wiedergabeeinrichtung dazu ausgebildet sein, die Darstellung des virtuellen Hintergrunds zeitlich zu verändern, um etwa Bewegungen in dem virtuellen Hintergrund wiedergeben zu können. Auch diese Veränderung der Darstellung kann mit einer bestimmten Aktualisierungsfrequenz erfolgen (auch als "refresh rate" bezeichnet), so dass die wiedergegebenen Darstellungen beispielsweise mit der Aktualisierungsfrequenz verändert bzw. gegen eine jeweilige nächste Darstellung ausgetauscht werden können.

Grundsätzlich bietet es sich bei einer Aufnahme in einem solchen virtuellen Bildaufnahmestudio an, die Bildaufnahmefrequenz der für die Aufnahme vorgesehenen Kamera und die Aktualisierungsfrequenz der Hintergrund-Wiedergabeeinrichtung miteinander zu synchronisieren, so dass jede von der Hintergrund-Wiedergabeeinrichtung wiedergegebene Darstellung des virtuellen Hintergrunds einer jeweiligen von der Kamera erzeugten Abbildung zugeordnet ist. Ferner kann es vorgesehen sein, dass die Hintergrund-Wiedergabeeinrichtung die Darstellung des virtuellen Hintergrunds mit einer bestimmten Lichtpulsfrequenz wiedergibt, die höher als die Aktualisierungsfrequenz ist. Die zugeordnete Kamera kann somit während einer Bildaufnahme gegebenenfalls mehrere Lichtpulse, welche die Darstellung des virtuellen Hintergrunds wiedergeben, registrieren.

Jedoch besteht auch bei einer solchen Synchronisation zwischen der Aktualisierungsfrequenz der Hintergrund-Wiedergabeeinrichtung und der Bildaufnahmefrequenz der Kamera die Problematik, dass die Kamera ein Bild üblicher Weise nicht während einer gesamten Bildaufnahmezeit erzeugt, sondern etwaige lichtempfindliche Elemente der Kamera lediglich während einer einstellbaren Belichtungszeit und/oder innerhalb eines einstellbaren Belichtungsfensters belichtet werden, welche bzw. welches grundsätzlich frei wählbar sein kann und nicht mit der Bildaufnahmefrequenz gekoppelt sein muss. Da insofern von der Bildaufnahmefrequenz losgelöste, für die Bildaufnahme jedoch relevante Einstellungen an der Kamera vornehmbar sein können, kann eine ausschließliche Synchronisation zwischen der Bildaufnahmefrequenz der Kamera und der Aktualisierungsfrequenz der Hintergrund-Wiedergabeeinrichtung unzureichend sein, um eine natürliche Abbildung der Darstellung des virtuellen Hintergrunds zu erreichen, welcher einer Abbildung eines dem virtuellen Hintergrund entsprechenden realen Hintergrund ähnelt. Beispielsweise können verschiedene Bereiche eines lichtempfindlichen Elements der Kamera in Abhängigkeit von einer Belichtungseinstellung verschiedenviele Lichtpulse während einer Aufnahme registrieren, so dass auch verschiedene Bereiche der von der Kamera erzeugten Abbildung unterschiedlich belichtet sein können. Ferner kann bei einer unzureichenden Synchronisation zwischen der Kamera und der Hintergrund-Wiedergabeeinrichtung ein sogenannter Tearing-Effekt in der von der Kamera erzeugten Abbildung entstehen, wenn die Darstellung des virtuellen Hintergrunds während einer Belichtung aktualisiert und letztlich zwei verschiedene Darstellungen des virtuellen Hintergrunds in derselben Abbildung abgebildet werden.

Es ist daher eine Aufgabe der Erfindung, Möglichkeiten zum Aufnehmen einer Darstellung eines virtuellen Hintergrunds, welche von einer Hintergrund-Wiedergabeeinrichtung in einem virtuellen Bildaufnahmestudio wiedergegeben wird, zu schaffen, durch welche gleichmäßig ausgeleuchtete Abbildungen von der Darstellung des virtuellen Hintergrunds erzeugt und aufgrund von Aktualisierungen der Darstellung entstehende Abbildungsfehler vermieden werden können.

Die Erfindung ist definiert in den unabhängigen Ansprüchen, während weitere Ausführungsbeispiele in den abhängigen Ansprüchen ausgeführt sind.

Diese Aufgabe wird gelöst durch ein Verfahren zum Wiedergeben einer Darstellung eines virtuellen Hintergrunds mittels einer Hintergrund-Wiedergabeeinrichtung für eine Aufnahme mit einer Kamera in einem virtuellen Bildaufnahmestudio, wobei die Wiedergabe der Darstellung des virtuellen Hintergrunds gemäß einer zeitlichen Steuerung erfolgt und wobei die Kamera die Wiedergabe der Darstellung des virtuellen Hintergrunds gemäß einer Abfolge von Belichtungszeiten aufnimmt. Ferner werden bei dem Verfahren die zeitliche Steuerung der Wiedergabe der Darstellung des virtuellen Hintergrunds und die Abfolge von Belichtungszeiten zueinander synchronisiert.

Um eine solche Synchronisation der zeitlichen Steuerung der Wiedergabe der Darstellung des virtuellen Hintergrunds und der Abfolge von Belichtungszeiten zu ermöglichen, können die Kamera und die Hintergrund-Wiedergabeeinrichtung insbesondere über ein Netzwerk miteinander verknüpft sein. Eine solche Verknüpfung kann insbesondere eine Synchronisation von Zeitsignalen der Kamera und der Hintergrund-Wiedergabeeinrichtung über ein entsprechendes Netzwerkprotokoll, beispielweise PTP (Precision Time Protocol), ermöglichen, wie auch nachstehend noch erläutert ist.

Die Hintergrund-Wiedergabeeinrichtung kann bei einigen Ausführungsformen dieses Verfahrens eine Vielzahl von aktiv leuchtenden Bildpunktelementen, insbesondere eine Vielzahl von Leuchtdioden umfassen, die eine zweidimensionale Anordnung bilden. Insbesondere können die aktiv leuchtenden Bildpunktelemente individuell und/oder in Gruppen von Bildpunktelementen ansteuerbar sein, um die Darstellung des virtuellen Hintergrunds wiederzugeben.

Bei einigen Ausführungsformen können die Hintergrund-Wiedergabeeinrichtung ferner als eine LED-Wand und die Bildpunktelemente als Leuchtdioden oder Leuchtdiodeneinheiten ausgebildet sein. Die Leuchtdioden einer solchen LED-Wand können beispielsweise als LED (Light Emitting Diode) oder als organische Leuchtdioden bzw. OLED (Organic Light Emitting Diode) ausgebildet sein. Ferner kann es bei einer LED-Wand vorgesehen sein, dass die einzelnen Bildpunktelemente, welche gemeinsam die Darstellung des virtuellen Hintergrunds erzeugen, von einzelnen Leuchtdioden gebildet sind. Die einzelnen Bildpunktelemente können jedoch auch von jeweiligen Leuchtdiodeneinheiten gebildet sein, wobei jede Leuchtdiodeneinheit insbesondere mehrere, insbesondere drei, Leuchtdioden umfassen kann. Beispielsweise kann eine Leuchtdiodeneinheit auch drei, vier oder mehr Leuchtdioden umfassen, wobei die mehreren Leuchtdioden einer Leuchtdiodeneinheit insbesondere unterschiedliche Emissionsspektren aufweisen können und optional mit einem Farbmischer ausgestattet sein können. Ferner kann es bei einer solchen Leuchtdiodeneinheit vorgesehen sein, dass die einzelnen Leuchtdioden der Leuchtdiodeneinheit selektiv ansteuerbar sind, um eine gewünschte Farbe des von der Leuchtdiodeneinheit gebildeten Bildpunktelements zu erzeugen. Insbesondere kann eine Leuchtdiodeneinheit eine rotes Licht emittierende Leuchtdiode, eine grünes Licht emittierende Leuchtdiode und eine blaues Licht emittierende Leuchtdiode umfassen.

Bei einigen Ausführungsformen kann es vorgesehen sein, dass die Bildpunktelemente individuell ansteuerbar sind, um die Darstellung des virtuellen Hintergrunds zu erzeugen. Insbesondere kann durch das Ansteuern der Bildpunktelemente eine jeweilige Farbe und/oder Helligkeit des Bildpunktelements einstellbar sein, um einen durch das jeweilige Bildpunktelement wiedergegebenen Abschnitt oder Punkt der Darstellung des virtuellen Hintergrunds auf die vorgesehene Farbe und/oder Helligkeit einstellen zu können.

Die Hintergrund-Wiedergabeeinrichtung kann sich bei einigen Ausführungsformen in einer vertikalen und/oder horizontalen Ausrichtung erstrecken, insbesondere mit kontinuierlichen oder quasi-kontinuierlichen Übergängen. Beispielsweise kann es vorgesehen sein, dass sich die Hintergrund-Wiedergabeeinrichtung in einer vertikalen Ausrichtung plan hinter dem realen Motiv erstreckt, um die Darstellung des virtuellen Hintergrunds hinter dem realen Motiv wiederzugeben. Alternativ oder zusätzlich kann es jedoch auch vorgesehen sein, dass sich die Hintergrund-Wiedergabeeinrichtung zumindest abschnittsweise in einer horizontalen Ausrichtung erstreckt, so dass die Darstellung des virtuellen Hintergrunds beispielsweise auch über dem realen Motiv wiedergegeben werden kann. Zudem kann die Hintergrund-Wiedergabeeinrichtung dazu ausgebildet sein, das reale Motiv zu umgeben und zu überdecken, um eine möglichst vollständige Wiedergabe des virtuellen Hintergrunds über einen großen Winkelbereich zu ermöglichen. In einem Abschnitt, in welchem die Hintergrund-Wiedergabeeinrichtung von einer vertikalen in eine horizontale Ausrichtung übergeht, kann die Hintergrund-Wiedergabeeinrichtung auch gewölbt und/oder gekrümmt sein. Insbesondere bei einer Zusammensetzung der Hintergrund-Wiedergabeeinrichtung aus mehreren Paneelen können die Paneele zu verschiedenen und beispielsweise gewölbeartigen Geometrien zusammengesetzt sein, um eine gewünschte Umgebung für eine Aufnahme in dem virtuellen Bildaufnahmestudio zu schaffen. Ferner kann es bei einigen Ausführungsformen vorgesehen sein, dass die Hintergrund-Wiedergabeeinrichtung abschnittsweise an einem Boden des virtuellen Bildaufnahmestudios angeordnet ist. Auch in solchen Abschnitten kann sich die Hintergrund-Wiedergabeeinrichtung insbesondere in einer horizontalen Ausrichtung erstrecken.

Die Hintergrund-Wiedergabeeinrichtung kann bei einigen Ausführungsformen ferner dazu ausgebildet sein, das reale Motiv zu beleuchten. Insbesondere kann dies Hintergrund-Wiedergabeeinrichtung dazu dienen, das reale Motiv zusätzlich zu einer sonstigen Beleuchtung des virtuellen Bildaufnahmestudios zu beleuchten. Beispielsweise kann dadurch erreicht werden, dass des reale Motiv einen zu erwarteten Schatten wirft, wenn in dem virtuellen Hintergrund Beleuchtungsquellen, beispielsweise eine Straßenlaterne, enthalten ist, indem von der wiedergegebenen Darstellung der Straßenlaterne des virtuellen Hintergrunds die von einer realen Straßenlaterne zu erwartende Beleuchtung des realen Motivs ausgeht. Die Hintergrund-Wiedergabeeinrichtung kann jedoch auch dazu ausgebildet sein, abschnittsweise Licht zur Beleuchtung einer Szene zu emittieren und gewissermaßen als Scheinwerfer zu fungieren, während die Hintergrund-Wiedergabeeinrichtung an anderen Abschnitten die Darstellung des virtuellen Hintergrunds wiedergeben kann.

Bei einigen Ausführungsformen kann die Hintergrund-Wiedergabeeinrichtung zudem dazu ausgebildet sein, die Darstellung des virtuellen Hintergrunds während der Aufnahme, insbesondere während der Aufnahme einer Szene, mit der Kamera zeitlich zu variieren. Insbesondere können dadurch in dem virtuellen Hintergrund ablaufende Ereignisse während einer Kameraaufnahme unmittelbar mittels der Hintergrund-Wiedergabeeinrichtung wiedergegeben werden, so dass ein Schauspieler, anders als beispielsweise bei einer Greenscreen-Aufnahme, auf diese Ereignisse reagieren und das Schauspiel darauf abstimmen kann. Die Hintergrund-Wiedergabeeinrichtung kann folglich insbesondere dazu ausgebildet sein, während der Kameraaufnahme eine Filmsequenz wiederzugeben, welche von der Kamera unmittelbar aufgezeichnet werden kann. Ein nachträgliches Überlagern der Aufnahme der Kamera mit einem vorgesehenen Hintergrund ist somit nicht mehr erforderlich.

Die Kamera kann beispielsweise als analoge Kamera oder als eine digitale Kamera ausgebildet sein und ein lichtempfindliches Element aufweisen, wobei das lichtempfindliche Element beispielsweise von einem Film oder von einem Bildsensor gebildet sein kann. Insbesondere kann es sich bei der Kamera um eine Laufbildkamera (auch als Bewegtbildkamera bezeichnet) handeln, welche dazu ausgebildet ist, eine Abfolge oder eine Sequenz von aufgenommenen Bildern zu erzeugen. Jedes der aufgenommenen Bilder kann einer jeweiligen Belichtung des lichtempfindlichen Elements entsprechen, so dass zwei aufeinanderfolgende Bilder durch eine Belichtungspause der Kamera getrennt sein können, in welcher ein Lichteinfall auf das lichtempfindliche Element unterbunden ist oder nicht berücksichtigt wird.

Insbesondere kann eine solche als Laufbildkamera ausgebildete Kamera aufeinanderfolgende Abbildungen mit einer bestimmten oder einstellbaren Bildaufnahmefrequenz erzeugen, so dass für die Aufnahme eines Bildes eine jeweilige Bildaufnahmezeit als das Reziproke der Bildaufnahmefrequenz zur Verfügung stehen kann. Die Belichtungszeit kann einem Anteil der Bildaufnahmezeit entsprechen, während derer das lichtempfindliche Element mit Licht beaufschlagt wird. Für den verbleibenden Teil der Bildaufnahmezeit kann das lichtempfindliche Element hingegen vor einem Lichteinfall geschützt sein, beispielsweise indem mechanisch ein Kameraverschlusses geschlossen wird oder indem zum Erzeugen eines digitalen Bilddatensatzes ausschließlich an den lichtempfindlichen Sensorelementen des Sensors generierte Ladung berücksichtigt wird, die infolge eines Lichteinfalls während der Belichtungszeit generiert wurde, wohingegen außerhalb der Belichtungszeit generierte Ladung nicht berücksichtigt wird. Dies kann beispielsweise erreicht werden, indem die Ladung der Sensorelemente vor einer vorgesehenen Belichtung durch eine entsprechende Schaltung gelöscht oder auf einen Referenzwert zurückgesetzt wird, um daraufhin ausgehend von vollkommen entladenen Sensorelementen mit der Belichtung und der Aufnahme einer Abbildung zu beginnen und die Sensorelemente nach Ablauf der Belichtungszeit auszulesen. Eine solche Schaltung zum Auslesen eines Bildsensors ist beispielsweise in DE 10 2010 035 811 A1 beschrieben.

Allgemein kann die Belichtungszeit somit einer Dauer einer Belichtung entsprechen, während derer ein lichtempfindliches Element der Kamera mit Licht beaufschlagt ist. Zudem kann die Belichtungszeit der Kamera von dem Beginn einer fotoelektrischen oder fotochemischen Signalerzeugung in einem ersten lichtempfindlichen Bereich bis zum Ende dieser Signalerzeugung in einem letzten lichtempfindlichen Bereich der Kamera erfolgen. Dies kann insbesondere vorgesehen sein, wenn die Kamera einen sogenannten Global Shutter aufweist, bei welchem sämtliche Bereiche des lichtempfindlichen Elements gleichzeitig ausgelesen und/oder vor einem Lichteinfall geschützt werden, so dass in jedem Bereich des lichtempfindlichen Elements die Belichtung zu einer gleichen Startzeit beginnen und zu einer gleichen Endzeit enden kann.

Jedoch kann es auch vorgesehen sein, dass verschiedene Bereiche und insbesondere verschiedene Zeilen von lichtempfindlichen Sensorelementen eines Bildsensors einer Kamera nacheinander belichtet werden, wenn die einzelnen Zeilen eines Bildsensors beispielsweise nacheinander ausgelesen werden. Bei einem solchen sukzessiven zeilenweisen Auslesen eines Bildsensors kann beispielsweise zunächst eine Zeile von Sensorelementen des Bildsensors belichtet werden, wobei die Belichtung einer darauffolgenden Zeile beginnen kann, sobald die Belichtung der vorhergehenden Zeile abgeschlossen und das Auslesen der während der Belichtung generierten Ladung in der vorhergehenden Zeile begonnen wird. Die Belichtungszeiten der einzelnen Zeilen des Bildsensors können somit gegeneinander versetzt sein. Ein solches Auslesen und Belichten der Zeilen der Sensorelemente ermöglicht insbesondere ein elektronisches Nachbilden eines mechanischen rollierenden Objektivverschlusses bzw. Rolling Shutter, bei welchem eine Öffnung eines Objektivverschlusses über bzw. entlang des lichtempfindlichen Elements - eines Films oder eines Bildsensors - gefahren wird, so dass verschiedene Bereiche des lichtempfindlichen Elementes zu unterschiedlichen Zeiten von der Öffnung des Objektivverschlusses für einen Lichteinfall freigegeben und wieder verschlossen werden. Die Belichtungszeiten können bei einem solchen mechanischen oder elektronischen Rolling Shutter letztlich dennoch für sämtliche Bereiche oder Zeilen des lichtempfindlichen Elements gleich sein, wobei sich jedoch Startzeitpunkte der Belichtungen der einzelnen Bereiche oder Zeilen voneinander unterscheiden können.

Die Belichtungszeit kann insofern allgemein der von einem Kameramann an der Kamera eingestellten Belichtungszeit entsprechen und der Begriff bezeichnet bei einer elektronischen Kamera mit Bildsensor insbesondere die Dauer der Belichtung eines jeweiligen Sensorelements. Im Falle eines Rolling Shutter ist dies insbesondere die Dauer der Belichtung der Sensorelemente einer jeweiligen Zeile, wobei die Belichtungszeiten der verschiedenen Zeilen zueinander versetzt sein und die Belichtungen der einzelnen Zeilen zu verschiedenen Anfangszeitpunkten beginnen können. Das Zeitintervall von dem Anfangszeitpunkt der Belichtung des ersten Sensorelements (z.B. der ersten Sensorzeile) bis zu dem Endzeitpunkt der Belichtung des letzten Sensorelements (z.B. der letzten Sensorzeile) kann daher als Belichtungsfenster bezeichnet werden, so dass das Belichtungsfenster bei einem Rolling Shutter aufgrund der verschobenen Belichtungszeiten der einzelnen Zeilen von Sensorelementen letztlich länger als die einzelne Belichtungszeit sein kann. Ähnlich kann bei einem mechanischen Rolling Shutter die Belichtungszeit eine Dauer bezeichnen, für welche ein jeweiliger Punkt des lichtempfindlichen Elements der Kamera - eines Films oder eines Bildsensors - während einer einzelnen Bildaufnahme einem Lichteinfall ausgesetzt ist. Auch bei einem mechanischen Rolling Shutter ist die Belichtungszeit geringer als ein Belichtungsfenster der Kamera, welches das Zeitintervall von dem Beginn einer Belichtung eines zuerst belichteten Bereichs des lichtempfindlichen Elements bis zum Ende der Belichtung des zuletzt belichteten Bereichs des lichtempfindlichen Elements bezeichnet.

Bei einem Global Shutter, bei welchem etwa die Ladung sämtlicher lichtempfindlichen Sensorelemente eines Bildsensors zeitgleich ausgelesen wird, kann das Belichtungsfenster hingegen der Belichtungszeit entsprechen. Ganz allgemein kann, sowohl bei einem Rolling Shutter als auch bei einem Global Shutter, zwischen zwei aufeinander folgenden Belichtungsfenstern eine Belichtungspause liegen, wobei während einer Belichtungspause einfallendes Licht von keinem der Sensorelemente eines Bildsensors in ein Sensorsignal umgewandelt wird oder das lichtempfindliche Element mechanisch vor einem Lichteinfall geschützt ist.

Indem die zeitliche Steuerung der Wiedergabe der Darstellung des virtuellen Hintergrunds und die Abfolge von Belichtungszeiten zueinander synchronisiert werden, kann insbesondere den einleitend genannten Problemen begegnet werden. Insbesondere kann das Synchronisieren der zeitlichen Steuerung der Wiedergabe der Darstellung ein Anpassen einer Frequenz und/oder eines Zeitpunkts bzw. einer Phasenlage einer Ansteuerung der Hintergrund-Wiedergabeeinrichtung oder einer Ansteuerung von Teilen der Hintergrund-Wiedergabeeinrichtung umfassen. Beispielsweise kann die Phasenlage von Aktualisierungszeitpunkten, zu welchen die wiedergegebene Darstellung des virtuellen Hintergrunds an der Hintergrund-Wiedergabeeinrichtung verändert wird, in Abhängigkeit von den Belichtungszeiten und insbesondere derart angepasst werden, dass die Darstellung ausschließlich außerhalb der Belichtungszeit und/oder eines Belichtungsfensters der Kamera verändert wird, um den eingangs erläuterten Tearing-Effekt zu vermeiden. Das Synchronisieren der Abfolge von Belichtungszeiten kann ein Anpassen einer Frequenz von aufeinanderfolgenden Belichtungszeiten und/oder ein Anpassen eines jeweiligen Zeitpunkts bzw. einer Phasenlage der Belichtungszeiten und/oder ein Anpassen einer jeweiligen Dauer der Belichtungszeiten umfassen. Beispielsweise kann auch durch Anpassen einer Phasenlage eines Startzeitpunkts einer Belichtung innerhalb einer Bildaufnahmezeit durch die Kamera erreicht werden, dass ein Belichtungsfenster der Kamera und/oder die Belichtungszeit der Kamera derart innerhalb der Bildaufnahmezeit verschoben werden/wird, dass eine Veränderung der Wiedergabe der Darstellung des virtuellen Hintergrunds außerhalb des Belichtungsfensters der Kamera erfolgt.

Beispielsweise können durch das Synchronisieren der zeitlichen Steuerung der Hintergrund-Wiedergabeeinrichtung und der Abfolge von Belichtungszeiten der Kamera die Belichtungszeiten ferner derart auf eine Lichtpulsfrequenz der Hintergrund-Wiedergabeeinrichtung, mit welcher die Hintergrund-Wiedergabeeinrichtung die Darstellung des virtuellen Hintergrunds wiedergibt, abgestimmt werden, dass jeder Bereich des lichtempfindlichen Elements der Kamera und insbesondere jede Zeile von Sensorelementen eines Bildsensors während einer Belichtungszeit dieselbe Anzahl von Lichtpulsen registriert. Hierdurch können beispielsweise Helligkeitsunterschiede zwischen verschiedenen Zeilen des Bildsensors vermieden werden, wenn die Zeilen zu unterschiedlichen Zeiten belichtet und/oder ausgelesen werden.

Ferner können grundsätzlich eine Bildaufnahmefrequenz der Kamera und eine Aktualisierungsfrequenz der Hintergrund-Wiedergabeeinrichtung aufeinander abgestimmt werden, so dass die Kamera während einer jeweiligen Belichtung eine erste Darstellung des virtuellen Hintergrunds aufnehmen kann, um in der darauffolgenden Belichtung eine gegenüber der ersten Darstellung veränderte zweite Darstellung des virtuellen Hintergrunds aufnehmen zu können. Die Bildaufnahmefrequenz entspricht entweder der Aktualisierungsfrequenz oder es ist vorgesehen, dass die Bildaufnahmefrequenz größer als die Aktualisierungsfrequenz ist und einem ganzzahligen Vielfachen, beispielsweise dem Zweifachen oder dem Vierfachen, der Aktualisierungsfrequenz entspricht, so dass mittels der Kamera beispielsweise zwei Aufnahmen der ersten Darstellung und zwei Aufnahmen der zweiten Darstellung erzeugt werden können.

Weitere Ausführungsformen sind den Ansprüchen, der Beschreibung und den Zeichnungen zu entnehmen.

Ferner ist ein Verfahren zum Wiedergeben einer Darstellung eines virtuellen Hintergrunds mittels einer Hintergrund-Wiedergabeeinrichtung, insbesondere einer Hintergrund-Wiedergabeeinrichtung wie hier offenbart, für eine Aufnahme mit einer Kamera, insbesondere einer Kamera wie hierin offenbart, in einem virtuellen Bildaufnahmestudio beschrieben. Bei diesem Verfahren wird die Darstellung des virtuellen Hintergrunds intermittierend gemäß einer Lichtpulsfrequenz wiedergegeben und gemäß einer Belichtungszeit der Kamera aufgenommen. Ferner wird bei dem Verfahren die Belichtungszeit der Kamera in Abhängigkeit von der Lichtpulsfrequenz der Hintergrund-Wiedergabeeinrichtung eingestellt oder die Lichtpulsfrequenz der Hintergrund-Wiedergabeeinrichtung wird in Abhängigkeit von der Belichtungszeit der Kamera eingestellt. Die Belichtungszeit der Kamera und/oder die Lichtpulsfrequenz der Hintergrund-Wiedergabeeinrichtung wird zudem bei diesem Verfahren derart eingestellt, dass die Belichtungszeit einem ganzzahligen Vielfachen des Reziproken der Lichtpulsfrequenz entspricht.

Wie bereits erläutert, kann die Hintergrund-Wiedergabeeinrichtung insbesondere dazu ausgebildet sein, die Darstellung des virtuellen Hintergrunds pulsierend mit einer bestimmten und/oder einstellbaren Lichtpulsfrequenz wiederzugeben, wobei diese Lichtpulsfrequenz insbesondere um ein Vielfaches größer als die Bildaufnahmefrequenz sein kann. Insbesondere kann die Lichtpulsfrequenz einem ganzzahligen Vielfachen einer Bildaufnahmefrequenz der Kamera entsprechen und es kann beispielsweise bei einer Bildaufnahmefrequenz der Kamera von 60 fps (frames per second) bzw. 60 Hz vorgesehen sein, die Hintergrund-Wiedergabeeinrichtung mit einer Lichtpulsfrequenz von 1920 Hz oder 3840 Hz zu betreiben, während bei einer Bildaufnahmefrequenz von 50 Hz beispielsweise 1600 Hz oder 3200 Hz als Lichtpulsfrequenz vorgesehen sein können. Auch bei einer Bildaufnahmefrequenz von 24 Hz bzw. 24 fps kann die Hintergrund-Wiedergabeeinrichtung beispielsweise mit einer Lichtpulsfrequenz von 1920 Hz oder von 3840 Hz betrieben werden.

Während die Lichtpulsfrequenz der Hintergrund-Wiedergabeeinrichtung somit auf die Bildaufnahmefrequenz der Kamera, die insbesondere auch einer Aktualisierungsfrequenz der Hintergrund-Wiedergabeeinrichtung entsprechen kann, abgestimmt sein kann, kann die Belichtungszeit der Kamera grundsätzlich frei einstellbar sein und einem beliebigen Anteil der Bildaufnahmezeit entsprechen. Insofern können die Belichtungszeit oder ein Belichtungsfenster der Kamera, während dessen beispielsweise nacheinander einzelne Zeilen eines als elektronischer Rolling Shutter betriebenen Bildsensors mit der eingestellten Belichtungszeit belichtet werden, unabhängig von der Bildaufnahmefrequenz sein, so dass zwischen der Lichtpulsfrequenz der Hintergrund-Wiedergabeeinrichtung und der Belichtungszeit der Kamera trotz der Abstimmung zwischen der Bildaufnahmefrequenz der Kamera und der Lichtpulsfrequenz kein ganzzahliger Zusammenhang bestehen kann.

Da jedoch insbesondere bei Kameras mit einem rollierenden Objektivverschluss verschiedene Bereiche eines lichtempfindlichen Elements, beispielsweise verschiedene Zeilen eines Bildsensors, zu unterschiedlichen Zeiten belichtet werden können, können aufgrund der fehlenden Verknüpfung zwischen der Belichtungszeit und der Lichtpulsfrequenz in verschiedenen Zeilen von Sensorelementen während einer Bildaufnahme verschieden viele und/oder verschiedene unregelmäßig unvollständige Lichtpulse registriert werden, was zu einer Modulation der Helligkeit über die verschiedenen Bereiche bzw. Zeilen in der von der Kamera erzeugten Abbildung der Darstellung des virtuellen Hintergrunds führen kann.

Indem jedoch die Belichtungszeit der Kamera und die Lichtpulsfrequenz der Hintergrund-Wiedergabeeinrichtung derart miteinander synchronisiert werden können, dass die Belichtungszeit einem ganzzahligen Vielfachen des Reziproken der Lichtpulsfrequenz entspricht, kann erreicht werden, dass beispielsweise jede Zeile eines zeilenweise belichteten und ausgelesenen Bildsensors dieselbe Anzahl von Lichtpulsen während einer Belichtung registriert, so dass eine Modulation über die Zeilen des Bildsensors verhindert werden kann. Insbesondere kann durch eine solche Synchronisation auch erreicht werden, dass selbst bei einer Phasenverschiebung zwischen den Startzeitpunkten der einzelnen Belichtungszeiten der einzelnen Zeilen des Bildsensors beispielsweise zu Beginn einer Belichtung in einer Zeile gerade der Teil eines Lichtpulses abgeschnitten wird, welcher von dem letzten innerhalb der Belichtungszeit dieser Zeile registrierten Lichtpuls noch in der Zeile registriert wird. Insgesamt kann somit in jeder Zeile eine ganzzahlige und gleichbleibende Anzahl vollständiger Lichtpulsen aufgenommen werden. Insbesondere kann die Synchronisation derart erfolgen, dass die Belichtungszeit einem ganzzahligen Vielfachen des Reziproken der Lichtpulsfrequenz größer als Eins entspricht. Dementsprechend kann jede Zeile des Bildsensors zumindest zwei Lichtpulse bei jeder Belichtung aufnehmen.

Die Synchronisation der Belichtungszeit der Kamera und der Lichtpulsfrequenz der Hintergrund-Wiedergabeeinrichtung kann durch Anpassen der Belichtungszeit an der Kamera oder durch Anpassen der Lichtpulsfrequenz an der Hintergrund-Wiedergabeeinrichtung erfolgen. Bei einem Anpassen der Belichtungszeit an der Kamera kann dies beispielsweise automatisch erfolgen, indem die Belichtungszeit automatisch derart eingestellt wird, dass die Belichtungszeit einem ganzzahligen Vielfachen des Reziproken der Lichtpulsfrequenz entspricht. Alternativ kann das Anpassen jedoch auch manuell an der Kamera erfolgen, wozu beispielsweise einem Benutzer auswählbare zulässige Belichtungszeiten angezeigt werden können, welche einem ganzzahligen Vielfachen des Reziproken der Lichtpulsfrequenz entsprechen. Auch die Hintergrund-Wiedergabeeinrichtung kann dazu ausgebildet sein, in Abhängigkeit von der Belichtungszeit der Kamera automatisch eine angepasste Lichtpulsfrequenz einzustellen und/oder einem Benutzer eine Auswahl möglicher Lichtpulsfrequenzen anzuzeigen, aus welchen der Benutzer wählen kann.

Bei einigen Ausführungsformen kann bei dem Verfahren ferner die Belichtungszeit der Kamera und/oder die Lichtpulsfrequenz der Hintergrund-Wiedergabeeinrichtung ermittelt werden. Beispielsweise kann die Lichtpulsfrequenz der Hintergrund-Wiedergabeeinrichtung an die Kamera übermittelt werden, so dass die Kamera und/oder eine Steuereinrichtung der Kamera zulässige Belichtungszeiten, die einem Vielfachen des Reziproken der Lichtpulsfrequenz entsprechen, bestimmen kann. Die zulässigen Belichtungszeiten können beispielsweise an der Kamera, insbesondere an einem Display, angezeigt werden, so dass ein Benutzer manuell zwischen den zulässigen Belichtungszeiten wählen kann. Alternativ dazu kann die Belichtungszeit der Kamera beispielsweise an die Hintergrund-Wiedergabeeinrichtung übermittelt werden, so dass beispielsweise eine Steuereinrichtung der Hintergrund-Wiedergabeeinrichtung die Lichtpulsfrequenz derart einstellen kann, dass die Belichtungszeit einem ganzzahligen Vielfachen des Reziproken der Lichtpulsfrequenz entspricht, oder dem Benutzer entsprechende Lichtpulsfrequenzen angezeigt und zur Auswahl angeboten werden können.

Ferner bezieht sich die Erfindung auf ein Verfahren zum Wiedergeben einer Darstellung eines virtuellen Hintergrunds mittels einer Hintergrund-Wiedergabeeinrichtung, insbesondere einer Hintergrund-Wiedergabeeinrichtung wie hierin offenbart, für eine Aufnahme mit einer Kamera, insbesondere einer Kamera wie hierin offenbart, in einem virtuellen Bildaufnahmestudio, wobei die Darstellung zu Aktualisierungszeitpunkten geändert und gemäß einer jeweiligen Belichtung der Kamera aufgenommen wird. Bei diesem Verfahren werden Belichtungspausen der Kamera zwischen aufeinanderfolgenden Belichtungen in Abhängigkeit von den Aktualisierungszeitpunkten der Hintergrund-Wiedergabeeinrichtung eingestellt oder die Aktualisierungszeitpunkte der Hintergrund-Wiedergabeeinrichtung werden in Abhängigkeit von Belichtungspausen der Kamera zwischen aufeinanderfolgenden Belichtungen eingestellt. Die jeweilige Einstellung der Belichtungspausen und/oder der Aktualisierungszeitpunkte erfolgt ferner derart, dass eine jeweilige Änderung der Darstellung des virtuellen Hintergrunds während einer Belichtungspause der Kamera erfolgt.

Durch ein solches Abstimmen der Aktualisierungszeitpunkte auf die Belichtungspausen der Kamera kann insbesondere erreicht werden, dass die Darstellung des virtuellen Hintergrunds nicht zu einem Zeitpunkt verändert wird, zu welchem ein Bereich oder eine Zeile eines lichtempfindlichen Elements der Kamera - eines Bildsensors oder eines Films - belichtet wird. Ein Verändern der Darstellung während der Belichtung kann, wiederum insbesondere bei einer Kamera mit einem rollierenden Objektivverschluss bzw. einem Rolling Shutter, dazu führen, dass in einigen Zeilen oder Bereichen des lichtempfindlichen Elements die ursprünglich wiedergegebene Darstellung aufgenommen wird, während in den anderen Zeilen bereits die veränderte Darstellung registriert wird. In dem letztlich von der Kamera erzeugten Bild können daher abschnittsweise verschiedene Darstellungen des virtuellen Hintergrunds abgebildet sein, so dass die Abbildung in zwei Teile getrennt erscheinen kann.

Durch das Abstimmen zwischen den Aktualisierungszeitpunkten und den Belichtungspausen der Kamera kann jedoch ein solcher sogenannter Tearing-Effekt vermieden werden, indem die Darstellung ausschließlich während der Belichtungspausen verändert wird. Während einer Belichtung können somit mittels der Kamera unveränderte Darstellungen des virtuellen Hintergrunds aufgenommen werden, so dass insbesondere in jeder Zeile eines Bildsensors dieselbe Darstellung des virtuellen Hintergrunds abgebildet werden kann.

Um dies zu erreichen, wird eine Bildaufnahmefrequenz der Kamera mit einer Aktualisierungsfrequenz der Hintergrund-Wiedergabeeinrichtung - also einer Frequenz, mit welcher die Hintergrund-Wiedergabeeinrichtung die Darstellung des virtuellen Hintergrunds verändert - synchronisiert. Dazu kann die Bildaufnahmefrequenz der Aktualisierungsfrequenz insbesondere entsprechen oder als ein ganzzahliges Vielfaches der Aktualisierungsfrequenz gewählt sein. Zudem kann beispielsweise eine Phase der Belichtungszeit und/oder der Belichtungspause der Kamera innerhalb einer Bildaufnahme derart festgelegt werden, dass die Aktualisierungszeitpunkte der Hintergrund-Wiedergabeeinrichtung in die Belichtungspausen der Kamera fallen. Alternativ zu einer Einstellung an der Kamera können auch die Aktualisierungszeitpunkte an der Hintergrund-Wiedergabeeinrichtung zum Synchronisieren mit den Belichtungspausen der Kamera derart zeitlich gegenüber dem Beginn einer Belichtung und/oder eines Belichtungsfensters der Kamera versetzt werden, dass die Darstellung des virtuellen Hintergrunds in den Belichtungspausen der Kamera verändert wird. Eine solche Abstimmung zwischen den Aktualisierungszeitpunkten und den Belichtungspausen kann insbesondere erreicht werden, indem die Kamera und die Hintergrund-Wiedergabeeinrichtung in einem Netzwerk verknüpft werden, so dass jeweilige Zeitsignale der Kamera und der Hintergrund-Wiedergabeeinrichtung über ein entsprechendes Netzwerk-Protokoll, beispielsweise PTP (Precision Time Protocol), miteinander synchronisiert werden können. Indem die Bildaufnahmefrequenz der Kamera und die Aktualisierungsfrequenz der Hintergrund-Wiedergabeeinrichtung ferner identisch gewählt sein können, können sich die Aktualisierungszeitpunkte und die Belichtungspausen mit identischer Frequenz wiederholen, so dass auch folgende Aktualisierungszeitpunkte stets in eine jeweilige Belichtungspause fallen können. Dies kann auch erreicht werden, wenn die Bildaufnahmefrequenz als ein ganzzahliges Vielfaches der Aktualisierungsfrequenz gewählt ist. Auch bei einer solchen Abstimmung zwischen der Aktualisierungsfrequenz und der Bildaufnahmefrequenz kann erreicht werden, dass ein folgender Aktualisierungszeitpunkt in eine Belichtungspause der Kamera fällt, sofern der jeweilige vorhergehende Aktualisierungszeitpunkt in eine Belichtungspause gefallen ist.

Darüber hinaus kann eine Kamera für eine Aufnahme einer Darstellung eines virtuellen Hintergrunds vorgesehen sein, die in einem virtuellen Bildaufnahmestudio mittels einer zugeordneten Hintergrund-Wiedergabeeinrichtung intermittierend gemäß einer Lichtpulsfrequenz wiedergegeben wird. Die Kamera umfasst eine Schnittstelle zum Empfangen eines Werts der Lichtpulsfrequenz der zugeordneten Hintergrund-Wiedergabeeinrichtung und eine Steuereinrichtung, wobei die Steuereinrichtung dazu ausgebildet ist, die Kamera gemäß einer einstellbaren Belichtungszeit zu steuern. Ferner ist die Steuereinrichtung dazu ausgebildet, in Abhängigkeit von dem empfangenen Wert der Lichtpulsfrequenz mehrere zulässige Belichtungszeiten zu bestimmen.

Insbesondere kann die Schnittstelle der Kamera dazu ausgebildet sein, die Lichtpulsfrequenz der Hintergrund-Wiedergabeeinrichtung kabelgebunden oder kabellos zu empfangen. Beispielsweise kann die Schnittstelle der Kamera die Lichtpulsfrequenz der Hintergrund-Wiedergabeeinrichtung unmittelbar von der Hintergrund-Wiedergabeeinrichtung empfangen, die dazu beispielsweise ebenfalls eine Schnittstelle aufweisen kann. Alternativ dazu kann die Lichtpulsfrequenz der Hintergrund-Wiedergabeeinrichtung beispielsweise durch eine Benutzereingabe an der Kamera eingebbar sein, so dass die Steuereinrichtung die zulässigen Belichtungszeiten anhand einer Benutzereingabe zur Übermittlung der Lichtpulsfrequenz der Hintergrund-Wiedergabeeinrichtung bestimmen kann. Dazu kann die Steuereinrichtung der Kamera insbesondere mit der Schnittstelle der Kamera verbunden sein. Ferner kann die Steuereinrichtung beispielsweise als CPU (Central Processing Unit) und/oder Mikroprozessor ausgebildet sein.

Indem die Steuereinrichtung dazu ausgebildet ist, mehrere zulässige Belichtungszeiten in Abhängigkeit von dem Wert der Lichtpulsfrequenz zu bestimmen, kann insbesondere erreicht werden, dass bei einem Einstellen einer zulässigen Belichtungszeit während einer Belichtung an verschiedenen Bereichen oder Zeilen eines lichtempfindlichen Elements der Kamera, beispielsweise eines Films oder eines Bildsensors, die gleiche Anzahl von Lichtpulsen registriert wird, wenn die verschiedenen Bereiche für die Belichtungszeit einem Lichteinfall ausgesetzt werden. Beispielsweise können zulässige Belichtungszeiten derart bestimmt sein, dass während einer Belichtungszeit eine ganzzahlige Anzahl von Lichtpulsen der Hintergrund-Wiedergabeeinrichtung registriert werden kann. Durch eine derartige Abstimmung der Belichtungszeit auf die Lichtpulsfrequenz der Hintergrund-Wiedergabeeinrichtung können insbesondere Modulationen der Helligkeit in einer von der Kamera erzeugten Abbildung der Darstellung des virtuellen Hintergrunds vermieden werden.

Die Kamera kann bei einigen Ausführungsformen einen elektronischen oder mechanischen rollierenden Objektivverschluss aufweisen.

Ein elektronischer Rolling Shutter ist beispielsweise in DE 10 2010 035 811 A1 beschrieben. Ein solcher elektronischer Rolling Shutter kann von einem Bildsensor gebildet sein, welcher eine Vielzahl von in Zeilen und Spalten angeordneten lichtempfindlichen Sensorelementen aufweist, wobei der Bildsensor zeilenweise ausgelesen wird. Um dies zu ermöglichen, können die Belichtungen der einzelnen Zeiten geringfügig zeitversetzt erfolgen, so dass jeweilige Belichtungszeiten der einzelnen Zeilen zeitlich verschoben sind, ohne dass diese zeitliche Verschiebung unmittelbar mit der Bildaufnahmefrequenz der Kamera zusammenhängt. Durch eine derartige Ansteuerung des Bildsensors kann insbesondere ein mechanischer Rolling Shutter nachgebildet werden, bei welchem ein mechanischer Objektivverschluss sukzessive zum Verschließen einer Blende bewegt werden kann, so dass einzelne Bereiche eines Films oder Bildsensors der Kamera zu unterschiedlichen Zeiten belichtet werden. Auch bei einem solchen mechanischen Rolling Shutter können daher grundsätzlich Unterschiede in der Anzahl von empfangenen Lichtpulsen an verschiedenen Positionen des Films oder des Bildsensors auftreten. Ein Rolling Shutter kann jedoch insbesondere bei Laufbildkameras zum Erstellen von Bewegtbildaufnahmen eingesetzt werden, um in den erzeugten Bildsequenzen natürlich anmutende Bewegungen darstellen zu können.

Bei einigen Ausführungsformen kann die Kamera einen Bildsensor mit einer Vielzahl von lichtempfindlichen Sensorelementen aufweisen. Der Bildsensor kann insbesondere als CMOS-Bildsensor ausgebildet sein und/oder eine Pixelmatrix aufweisen, welche eine Vielzahl von in mehreren Zeilen und in mehreren Spalten angeordneten Pixel umfasst. Jedes der Pixel kann dazu ausgebildet sein, aus während einer Belichtung auftreffendem Licht elektrische Ladung zu erzeugen. Ferner kann der Bildsensor eine Ausleseeinrichtung umfassen, welche dazu ausgebildet ist, zeilenweise die während der Belichtung an den Pixeln der Pixelmatrix erzeugte elektrische Ladung auszulesen und in einen jeweiligen digitalen Pixelwert umzuwandeln. Die Pixelwerte der Pixelmatrix können sodann als digitaler Datensatz ausgegeben werden. Wie bereits erläutert, kann durch einen solchen zeilenweise ausgelesenen Bildsensor insbesondere ein elektronischer Rolling Shutter gebildet werden.

Bei einigen Ausführungsformen kann die Steuereinrichtung dazu ausgebildet sein, die zulässigen Belichtungszeiten derart zu bestimmen, dass die zulässigen Belichtungszeiten ganzzahligen Vielfachen des Reziproken der Lichtpulsfrequenz entsprechen. Insbesondere können die zulässigen Belichtungszeiten durch ganzzahlige Vielfache des Reziproken der Lichtpulsfrequenz größer als Eins definiert sein.

Beispielsweise kann es vorgesehen sein, mittels der Kamera eine Aufnahme mit einer Bildaufnahmefrequenz von 24 Hz bzw. 24 fps durchzuführen, während die Hintergrund-Wiedergabeeinrichtung mit einer Lichtpulsfrequenz von 1920 Hz betrieben werden kann. In diesem Fall können pro aufgenommenem Bild bzw. in jeder Bildaufnahmezeit grundsätzlich achtzig Lichtpulse erzeugt werden. Daher können, in diesem Beispiel, achtzig zulässige Belichtungszeiten bestimmt werden, wobei die zulässigen Belichtungszeiten eine jeweilige Dauer von n x 1/1920 Hz mit n = 1 bis 80 besitzen.

Durch eine derartige Wahl der zulässigen Belichtungszeiten kann somit erreicht werden, dass in jeder Belichtungszeit eine ganzzahlige vollständige Anzahl von Lichtpulsen registriert wird. Insbesondere bei Kameras mit einem Rolling Shutter kann dadurch sichergestellt werden, dass in jedem Bereich oder in jeder Zeile des lichtempfindlichen Elements - eines Films oder eines Bildsensors - dieselbe Anzahl an Lichtpulsen während einer Belichtung erfasst wird, um eine Modulation der Helligkeit in der von der Kamera erzeugten Abbildung der Darstellung des virtuellen Hintergrunds zu vermeiden.

Die Steuereinrichtung der Kamera kann insbesondere dazu ausgebildet sein, sämtliche Belichtungszeiten als zulässige Belichtungszeiten zu ermitteln, die einem ganzzahligen Vielfachen des Reziproken der Lichtpulsfrequenz entsprechen. Jedoch kann die Steuereinrichtung dazu ausgebildet sein, eine obere Grenze und/oder eine untere Grenze für die zulässigen Belichtungszeiten zu berücksichtigen und etwa ausschließlich innerhalb der oberen Grenze und/oder der unteren Grenze liegende Belichtungszeiten weiterzuverarbeiten. Insbesondere können zumindest ausschließlich Belichtungszeiten berücksichtigt werden, die geringer als oder gleich der Bildaufnahmezeit sind. Dies wird nachstehend noch näher erläutert.

Die Steuereinrichtung kann bei einigen Ausführungsformen dazu ausgebildet sein, die mehreren zulässigen Belichtungszeiten derart zu bestimmen, dass die zulässigen Belichtungszeiten innerhalb eines vorbestimmten Zulässigkeitsbereichs liegen. Insbesondere können somit lediglich solche ganzzahligen Vielfachen des Reziproken der Lichtpulsfrequenz berücksichtigt werden, die innerhalb des vorbestimmten Zulässigkeitsbereichs liegen. Die Steuereinrichtung kann insbesondere dazu ausgebildet sein, Grenzen der einstellbaren Belichtungszeiten zu berücksichtigen. Zusätzlich zu der bereits genannten oberen Grenze der Belichtungszeit als der gesamten Bildaufnahmezeit kann eine untere Grenze beispielsweise kameraspezifisch und/oder sensorspezifisch durch eine minimale Belichtungszeit definiert sein, welche eine Bildaufnahme mit oberhalb eines bloßen Rauschens liegenden Signalen ermöglicht.

Bei einigen Ausführungsformen kann die Steuereinrichtung dazu ausgebildet sein, die zulässigen Belichtungszeiten rechnerisch oder durch Nachschlagen in einer Tabelle zu bestimmen. Beispielsweise kann die Steuereinrichtung mit einem Speicher, insbesondere einem nichtflüchtigen Speicher und/oder Halbleiterspeicher, verbunden sein, in welchem für verschiedene Lichtpulsfrequenzen jeweilige zulässige Belichtungszeiten gespeichert sind. Insbesondere kann in dem Speicher für verschiedene, insbesondere gängige, Lichtpulsfrequenzen eine jeweilige Tabelle gespeichert sein, welche die für diese Lichtpulsfrequenz zulässigen Belichtungszeiten umfasst. Alternativ dazu kann die Steuereinrichtung auch dazu ausgebildet sein, anhand der Lichtpulsfrequenz eine Lichtpulsdauer als eine minimale zulässige Belichtungszeit zu berechnen, um sämtliche zulässige Belichtungszeiten daraufhin als ganzzahlige Vielfache der Lichtpulsdauer zu bestimmen.

Ferner kann die Steuereinrichtung dazu ausgerichtet sein, die Kamera gemäß einer der bestimmten zulässigen Belichtungszeiten zu steuern. Insbesondere kann die Steuereinrichtung dazu einen Bildsensor bzw. ein Auslesen eines Bildsensors oder einen Objektivverschluss derart steuern, dass einzelne Zeilen oder Bereiche eines lichtempfindlichen Elements der Kamera, eines Films oder eines Bildsensors, gemäß einer der bestimmten zulässigen Belichtungszeiten belichtet werden. Die Steuereinrichtung kann insofern dazu ausgebildet sein, automatisch eine zulässige Belichtungszeit an der Kamera einzustellen.

Die Kamera kann ferner bei einigen Ausführungsformen eine Wiedergabeeinrichtung zum Übermitteln von Informationen an einen Benutzer aufweisen und dazu ausgebildet sein, eine Information über die bestimmten zulässigen Belichtungszeiten an der Wiedergabeeinrichtung anzuzeigen. Beispielsweise kann die Kamera ein Display umfassen, an welchem derartige Informationen dargestellt werden. Die Informationen können insbesondere an einem elektronischen Sucher der Kamera oder einem separaten Display, welches an einer Außenseite eines Gehäuses der Kamera angeordnet ist, wiedergegeben werden. Ein solcher Display kann insbesondere auch als Touchscreen ausgebildet sein, so dass ein Benutzer unmittelbar an dem Display bzw. der Wiedergabeeinrichtung Einstellungen, etwa zum Einstellen der Belichtungszeit, vornehmen kann.

Die Information kann bei einigen Ausführungsformen Werte der zulässigen Belichtungszeiten und/oder Werte von Öffnungswinkeln eines Objektivverschlusses der Kamera repräsentieren.

Insbesondere können an der Wiedergabeeinrichtung somit unmittelbar die zulässigen Belichtungszeiten und/oder eine zulässige Belichtungszeit wiedergegeben werden, deren ganzzahlige Vielfache ebenfalls zulässige Belichtungszeiten darstellen. Es kann jedoch auch, beispielsweise für einen Rolling Shutter, anstelle einer Belichtungszeit ein Öffnungswinkel des Objektivverschlusses wiedergegeben werden, wobei der jeweilige Öffnungswinkel einem Winkel entsprechen kann, dessen Anteil an 360° einem Anteil einer zulässigen Belichtungszeit an der Bildaufnahmezeit der Kamera entsprechen kann. Insofern können beispielsweise in dem oben erläuterten Ausführungsbeispiel mit einer Lichtpulsfrequenz von 1920 Hz bei einer Bildaufnahmefrequenz von 24 Hz 80 Lichtpulse pro Bildaufnahme erzeugt werden, so dass durch ein ganzzahliges Vielfaches von 360°/80 = 4,5° ein Öffnungswinkel eines Objektivverschlusses definiert werden kann, welcher einer zulässigen Belichtungszeit entspricht.

Die Steuereinrichtung kann bei einigen Ausführungsformen mit einer Eingabeeinrichtung verbunden sein, welche dazu ausgebildet ist, durch eine Benutzereingabe eine einzustellende Belichtungszeit zu empfangen und an die Steuereinrichtung zu übermitteln, wobei die Steuereinrichtung dazu ausgebildet sein kann, die einzustellende Belichtungszeit an der Kamera einzustellen. Insbesondere kann eine solche Eingabeeinrichtung auch mit der Schnittstelle der Kamera verbunden sein, um beispielsweise durch eine Benutzereingabe einen Wert der Lichtpulsfrequenz der Hintergrund-Wiedergabeeinrichtung an die Kamera übermitteln zu können.

Die Eingabeeinrichtung kann beispielsweise einen Touchscreen und/oder Knöpfe oder Buttons umfassen, um die Benutzereingabe zu ermöglichen. Die Eingabeeinrichtung beispielsweise auch ein drehbares Bedienrad umfassen, um eine Belichtungszeit einstellen zu können. Insbesondere kann die Eingabeeinrichtung mit der vorstehend bereits genannten Wiedergabeeinrichtung zusammenwirken, indem beispielsweise ein Touchscreen sowohl zur Wiedergabe der Informationen über zulässige Belichtungszeiten als auch zum Empfangen der Benutzereingabe ausgebildet sein kann.

Grundsätzlich kann die einzustellende Belichtungszeit einen beliebigen Wert besitzen und muss nicht unbedingt einer der bestimmten zulässigen Belichtungszeiten entsprechen. Die Steuereinrichtung kann also grundsätzlich und insbesondere unabhängig von einer empfangenen Lichtpulsfrequenz dazu ausgebildet sein, eine Belichtungszeit der Kamera einzustellen. Jedoch kann es sich bei der einzustellenden Belichtungszeit der Kamera auch um eine Auswahl von zulässigen Belichtungszeiten handeln, insbesondere, wenn die zulässigen Belichtungszeiten an einer Wiedergabeeinrichtung der Kamera wiedergegeben werden und der Benutzer eine solche zulässige Belichtungszeit auswählt.

Die Steuereinrichtung kann bei einigen Ausführungsformen ferner dazu ausgebildet sein, die einzustellende Belichtungszeit ausschließlich dann einzustellen, wenn die einzustellende Belichtungszeit eine zulässige Belichtungszeit ist. Bei solchen Ausführungsformen kann der Benutzer folglich ausschließlich zwischen zulässigen Belichtungszeiten wählen, wohingegen das Einstellen einer nicht zulässigen Belichtungszeit von der Steuereinrichtung verhindert werden kann. Insbesondere kann dies jedoch dadurch erreicht werden, dass lediglich die bestimmten zulässigen Belichtungszeiten, insbesondere unter Berücksichtigung jeweiliger Grenzen, an der Wiedergabeeinrichtung angezeigt und dem Benutzer zur Auswahl angeboten werden, so dass der Benutzer ohnehin lediglich zulässige Belichtungszeiten einstellen kann. Dies kann beispielsweise auch dadurch erreicht werden, dass die Belichtungszeit an der Kamera schrittweise einstellbar ist, wobei die Schritte automatisch mittels der Steuereinrichtung auf das Reziproke der empfangenen Lichtpulsfrequenz einstellbar sein können. Beispielsweise kann zum Einstellen der Belichtungszeit an der Kamera dazu bei einigen Ausführungsformen ein schrittweise drehbares Bedienrad, insbesondere als Teil der vorstehend genannten Eingabeeinrichtung, vorgesehen sein, wobei die Schritte durch die Steuereinrichtung automatisch auf jeweilige zulässige Belichtungszeiten einstellbar sein können.

Ferner kann die Steuereinrichtung bei einigen Ausführungsformen dazu ausgebildet sein, eine der einzustellenden Belichtungszeit nächstgelegene zulässige Belichtungszeit einzustellen, wenn die einzustellende Belichtungszeit keine zulässige Belichtungszeit ist. Bei solchen Ausführungsformen kann der Benutzer somit grundsätzlich frei eine Belichtungszeit einstellen, wobei die Steuereinrichtung die einzustellende Belichtungszeit jedoch gegebenenfalls auf eine zulässige Belichtungszeit anpassen kann. Dadurch kann erreicht werden, dass die von der Kamera erzeugte Abbildung annähernd mit der von dem Benutzer gewünschten Belichtungszeit erzeugt wird, jedoch gleichzeitig sichergestellt wird, dass sämtliche Bereiche oder Zeilen eines lichtempfindlichen Elements der Kamera eine gleichbleibende Anzahl von Lichtpulsen während einer Bildaufnahme registrieren.

Die Steuereinrichtung kann bei einigen Ausführungsformen dazu ausgebildet sein, automatisch in Abhängigkeit von der Lichtimpulsfrequenz eine zulässige Belichtungszeit einzustellen. Beispielsweise kann die Steuereinrichtung dazu ausgebildet sein, eine zulässige Belichtungszeit, welche einer aktuell eingestellten Belichtungszeit am nächsten ist, automatisch nach dem Empfangen der Lichtimpulsfrequenz der Hintergrund-Wiedergabeeinrichtung einzustellen. Auch dadurch kann erreicht werden, dass eine von dem Benutzer vorgenommene Voreinstellung der Belichtungszeit berücksichtigt wird, um jedoch gleichzeitig ungewünschte Modulationen in den Abbildungen der Darstellungen des virtuellen Hintergrunds aufgrund von in verschiedenen Bereichen oder Zeilen eines lichtempfindlichen Elements ungleichen Anzahlen aufgenommener Lichtpulse zu verhindern.

Ferner kann eine Hintergrund-Wiedergabeeinrichtung für ein virtuelles Bildaufnahmestudio vorgesehen sein, welche dazu ausgebildet ist, hinter einem realen Motiv eine Darstellung eines virtuellen Hintergrunds für eine Aufnahme mittels einer zugeordneten Kamera wiederzugeben. Die Hintergrund-Wiedergabeeinrichtung weist eine Steuereinrichtung auf, welche dazu ausgebildet ist, die Hintergrund-Wiedergabeeinrichtung zu einer intermittierenden Wiedergabe der Darstellung des virtuellen Hintergrunds gemäß einer einstellbaren Lichtimpulsfrequenz anzusteuern. Ferner weist die Hintergrund-Wiedergabeeinrichtung eine Schnittstelle auf, welche dazu ausgebildet ist, einen Wert einer eingestellten Belichtungszeit der zugeordneten Kamera zu empfangen, und die Steuereinrichtung ist dazu ausgebildet, die Lichtimpulsfrequenz der Hintergrund-Wiedergabeeinrichtung in Abhängigkeit von dem empfangenen Wert der eingestellten Belichtungszeit der zugeordneten Kamera einzustellen.

Auch durch eine solche Einstellung der Lichtpulsfrequenz durch die Steuereinrichtung der Hintergrund-Wiedergabeeinrichtung kann letztlich erreicht werden, dass die Lichtimpulsfrequenz der Hintergrund-Wiedergabeeinrichtung auf die Belichtungszeit der Kamera abgestimmt ist. In diesem Fall kann jedoch die Belichtungszeit an der Kamera vollkommen frei wählbar sein, indem die erforderliche Anpassung letztlich an der Hintergrund-Wiedergabeeinrichtung durchgeführt wird. Auch die Schnittstelle der Hintergrund-Wiedergabeeinrichtung kann dazu ausgebildet sein, die Belichtungszeit der zugeordneten Kamera kabellos oder kabelgebunden zu empfangen. Zudem kann die Schnittstelle dazu ausgebildet sein, die Belichtungszeit unmittelbar von der zugeordneten Kamera zu empfangen, oder die Schnittstelle kann dazu ausgebildet sein, die Belichtungszeit der Kamera durch Benutzereingabe zu empfangen.

Die Steuereinrichtung der Hintergrund-Wiedergabeeinrichtung kann bei einigen Ausführungsformen dazu ausgebildet sein, die Lichtimpulsfrequenz derart einzustellen, dass die Lichtimpulsfrequenz einem ganzzahligen Vielfachen des Reziproken des empfangenen Werts der eingestellten Belichtungszeit entspricht. Wiederum kann dadurch erreicht werden, dass während einer Belichtung der Kamera insbesondere jeder Bereich und/oder jede Zeile eines lichtempfindlichen Elements der Kamera, insbesondere eines Films oder eines Bildsensors, mit derselben Anzahl von Lichtpulsen beaufschlagt wird, um etwaige Helligkeitsmodulationen in einer von der Kamera erzeugten Abbildung der Darstellung des virtuellen Hintergrunds zu vermeiden.

Auch im Zusammenhang mit einer solchen einstellbaren Hintergrund-Wiedergabeeinrichtung kann die zugeordnete Kamera insbesondere einen elektronischen oder mechanischen rollierenden Objektivverschluss aufweisen, so dass unterschiedliche Bereiche oder Zeilen eines lichtempfindlichen Elements der Kamera zu unterschiedlichen Zeiten belichtet werden können. Ferner kann die Kamera insbesondere einen Bildsensor mit einer Vielzahl von lichtempfindlichen Sensorelementen aufweisen, die in mehreren Zeilen und Spalten angeordnet sind, wobei diese Zeilen insbesondere zeilenweise und nacheinander für eine jeweilige, gleichbleibende Belichtungszeit belichtet werden können.

Die Steuereinrichtung kann ferner insbesondere dazu ausgebildet sein, die Lichtimpulsfrequenz derart einzustellen, dass die Lichtimpulsfrequenz einem ganzzahligen Vielfachen des Reziproken des empfangenen Werts der eingestellten Belichtungszeit größer als Eins entspricht. Ferner kann die Steuereinrichtung zudem dazu ausgebildet sein, eine obere Grenze und/oder eine untere Grenze der einstellbaren Lichtimpulsfrequenz zu berücksichtigen.

Die Steuereinrichtung der Hintergrund-Wiedergabeeinrichtung kann bei einigen Ausführungsformen dazu ausgebildet sein, die Lichtimpulsfrequenz der Hintergrund-Wiedergabeeinrichtung automatisch einzustellen, oder die Steuereinrichtung kann dazu ausgebildet sein, einem Benutzer eine Information über zulässige Lichtimpulsfrequenzen zu übermitteln, um in Abhängigkeit von einer Benutzereingabe eine der zulässigen Lichtimpulsfrequenzen einzustellen. Dazu kann auch die Hintergrund-Wiedergabeeinrichtung insbesondere eine Eingabeeinrichtung und/oder eine Wiedergabeeinrichtung aufweisen, um Informationen an den Benutzer übermitteln und/oder Benutzereingaben empfangen zu können. Die Wiedergabeeinrichtung und/oder die Eingabeeinrichtung können/kann beispielsweise als ein Display und/oder Touchscreen ausgebildet sein.

Bei einigen Ausführungsformen kann die Hintergrund-Wiedergabeeinrichtung eine Vielzahl von aktiv leuchtenden Bildpunktelementen, insbesondere Leuchtdioden, umfassen, die eine zweidimensionale Anordnung bilden. Zudem kann die Hintergrund-Wiedergabeeinrichtung die vorstehend bereits zu einer Hintergrund-Wiedergabeeinrichtung für ein virtuelles Bildaufnahmestudio erläuterten Merkmale aufweisen.

Ferner betrifft die Erfindung eine Hintergrund-Wiedergabeeinrichtung für ein virtuelles Bildaufnahmestudio, welche dazu ausgebildet ist, hinter einem realen Motiv eine Darstellung eines virtuellen Hintergrunds für eine Aufnahme mittels einer zugeordneten Kamera wiederzugeben. Die Hintergrund-Wiedergabeeinrichtung weist eine Steuereinrichtung auf, welche dazu ausgebildet ist, die Darstellung des virtuellen Hintergrunds zu einstellbaren Aktualisierungszeitpunkten zu ändern. Ferner weist die Hintergrund-Wiedergabeeinrichtung eine Schnittstelle auf, welche dazu ausgebildet ist, eine Information über Belichtungspausen zwischen aufeinanderfolgenden Belichtungen der zugeordneten Kamera zu empfangen. Die Steuereinrichtung ist dazu ausgebildet, die Aktualisierungszeitpunkte der Hintergrund-Wiedergabeeinrichtung in Abhängigkeit von der empfangenen Information über die Belichtungspausen der zugeordneten Kamera einzustellen.

Die Steuereinrichtung der Hintergrund-Wiedergabeeinrichtung ist ferner dazu ausgebildet, die Darstellung des virtuellen Hintergrunds mit einer vorgegebenen und/oder einstellbaren Aktualisierungsfrequenz zu ändern. In diesem Zusammenhang kann die Steuereinrichtung dazu ausgebildet sein, bei einem Ändern oder Aktualisieren der Darstellung des virtuellen Hintergrunds die enthaltenen Bildinformationen entsprechend der mittels der Hintergrund-Wiedergabeeinrichtung wiedergegebenen Darstellung zu verändern.

Beispielsweise kann die Information über Belichtungspausen zwischen aufeinanderfolgenden Belichtungen der zugeordneten Kamera die Belichtungszeit und/oder eine Bildaufnahmefrequenz der zugeordneten Kamera umfassen. Die Schnittstelle der Hintergrund-Wiedergabeeinrichtung kann ferner dazu ausgebildet sein, diese Informationen unmittelbar von der Kamera oder durch eine Benutzereingabe zu empfangen. Eine Kommunikation zwischen der Kamera und der Schnittstelle der Hintergrund-Wiedergabeeinrichtung kann insbesondere kabellos oder kabelgebunden erfolgen.

Zudem kann die Information über die Belichtungspausen einen Zeitpunkt eines Beginns einer Belichtungszeit und/oder eines Belichtungsfensters innerhalb einer Bildaufnahme der Kamera und/oder einer Phasenlage der Belichtungszeit innerhalb einer Bildaufnahmezeit der Kamera umfassen. Während einer Aufnahme mittels der Kamera, bei welcher die Kamera mit einer vorgegebenen oder einstellbaren Bildaufnahmefrequenz Abbildungen der Darstellung des virtuellen Hintergrunds erzeugt, kann insofern auch das Belichtungsfenster periodisch mit der Bildaufnahmefrequenz wiederholt werden, wobei zwischen den Belichtungsfenstern die Belichtungspausen angeordnet sind. Durch Übermitteln einer Information über den Beginn eines Belichtungsfensters und dessen Dauer kann das Belichtungsfenster innerhalb einer Bildaufnahme zeitlich verortet werden, um beispielsweise durch entsprechendes Verschieben der Aktualisierungszeitpunkte gegenüber dem Start des Belichtungsfensters und/oder gegenüber dem Ende des Belichtungsfensters erreichen zu können, dass die Darstellung des virtuellen Hintergrunds außerhalb des Belichtungsfensters an der Hintergrund-Wiedergabeeinrichtung verändert wird. Insbesondere kann dazu die Darstellung des virtuellen Hintergrunds mittels der Steuereinrichtung der Hintergrund-Wiedergabeeinrichtung mit einer Aktualisierungsfrequenz veränderbar sein, welche der Bildaufnahmefrequenz der zugeordneten Kamera und/oder einem ganzzahligen Anteil der Bildaufnahmefrequenz der zugeordneten Kamera entsprechen kann. Hierdurch kann durch einmaliges Verschieben eines Aktualisierungszeitpunkts gegenüber einem Belichtungsfenster, um diesen Aktualisierungszeitpunkt in eine Belichtungspause zu verlegen, sichergestellt werden, dass auch die folgenden, periodisch wiederkehrenden Aktualisierungszeitpunkte in Belichtungspausen der zugeordneten Kamera liegen.

Um eine solche Übermittlung einer Information über die Belichtungspausen der Kamera an die Hintergrund-Wiedergabeeinrichtung zu ermöglichen, können die Hintergrund-Wiedergabeeinrichtung und die Kamera insbesondere in einem Netzwerk miteinander verknüpft sein. Eine solche Verknüpfung kann eine Synchronisation der Aktualisierungszeitunkte und der Belichtungszeiten über ein entsprechendes Netzwerkprotokoll, beispielsweise PTP (Precision Time Protocol), ermöglichen, wozu das Netzwerk insbesondere zusätzlich zu der Kamera und der Hintergrund-Wiedergabeeinrichtung eine Zeitmesseinrichtung umfassen kann, die als Referenzuhr (auch als Grandmaster Clock bezeichnet) fungieren kann. Alternativ dazu kann jedoch auch eine jeweilige Zeitmesseinrichtung der Kamera oder der Hintergrund-Wiedergabeeinrichtung die Referenzuhr in dem Netzwerk bilden. Zur Steuerung der Synchronisation zwischen der Kamera und der Hintergrund-Wiedergabeeinrichtung kann eine Netzwerk-Steuereinrichtung vorgesehen sein, welche beispielsweise einen Mikroprozessor umfassen und dazu ausgebildet sein kann, entsprechende Verzögerungen zwischen den Zeitsignalen der Kamera und/oder der Hintergrund-Wiedergabeeinrichtung zu den Zeitsignalen der Referenzuhr zu ermitteln und die Zeitsignale der Kamera und/oder der Hintergrund-Wiedergabeeinrichtung an die Zeitsignale der Referenzuhr anzunähern. Alternativ dazu können/kann jedoch auch die Steuereinrichtung der Hintergrund-Wiedergabeeinrichtung und/oder eine Steuereinrichtung der Kamera dazu ausgebildet sein, die Synchronisation zwischen Zeitsignalen der Kamera und Zeitsignalen der Hintergrund-Wiedergabeeinrichtung vorzunehmen. Insbesondere kann die Steuereinrichtung derjenigen der Kamera und der Hintergrund-Wiedergabeeinrichtung zum Durchführen der Synchronisation ausgebildet sein, welche die Referenzuhr in dem Netzwerk bildet.

Ferner ist die Steuereinrichtung der Hintergrund-Wiedergabeeinrichtung dazu ausgebildet, die Aktualisierungszeitpunkte derart einzustellen, dass eine jeweilige Änderung der Darstellung des virtuellen Hintergrunds während einer Belichtungspause der zugeordneten Kamera erfolgt.

Wie bereits erläutert, kann durch eine derartige Ansteuerung der Hintergrund-Wiedergabeeinrichtung erreicht werden, dass sich die Darstellung des virtuellen Hintergrunds nicht innerhalb einer Belichtung bzw. eines Belichtungsfensters der zugeordneten Kamera verändert, um zu vermeiden, dass in einer einzigen Abbildung zwei oder mehr Darstellungen des virtuellen Hintergrunds abgebildet werden. Vielmehr wird durch eine solche Synchronisation zwischen der Aktualisierung der Darstellung des virtuellen Hintergrunds und der Belichtungspausen der Kamera für die gesamte Dauer einer Belichtung eine unveränderte Darstellung des virtuellen Hintergrunds wiedergegeben, so dass während jeder Bildaufnahme eine einzige Darstellung des virtuellen Hintergrunds abgebildet werden kann.

Die empfangene Information über die Belichtungspausen der zugeordneten Kamera kann bei einigen Ausführungsformen den Beginn, oder den Beginn und die Dauer, wenigstens einer Belichtungspause repräsentieren. Insbesondere kann die Information den Beginn, oder den Beginn und die Dauer wenigstens einer einzelnen Belichtungspause oder einer Serie von aufeinanderfolgenden Belichtungspausen repräsentieren. Beispielsweise können die Aktualisierungspunkte dadurch mittels der Steuereinrichtung der Hintergrund-Wiedergabeeinrichtung derart einstellbar sein, dass die Darstellung des virtuellen Hintergrunds unmittelbar nach dem Beginn einer Belichtungspause verändert wird und somit zu einem Zeitpunkt, zu welchem die darauffolgende Belichtung noch nicht begonnen hat. Bei einem Empfang einer Information über den Beginn und die Dauer der Belichtungspause kann es insbesondere auch vorgesehen sein, die Aktualisierungszeitpunkte in die Mitte einer Belichtungspause zu legen, um eventuelle Abbildungseffekte beispielsweise aufgrund eines geringfügigen Schwankens der Aktualisierungsfrequenz zu verhindern.

Insbesondere kann die empfangene Information über die Belichtungspausen eine Information über einen Zeitpunkt einer jeweiligen Belichtungspause, oder eine Information über eine Frequenz und eine jeweilige Phasenlage von aufeinander folgenden Belichtungspausen umfassen. Die empfangene Information über die Belichtungspausen kann zusätzlich eine Information über eine Dauer einer jeweiligen Belichtungspause umfassen. Die empfangene Information über die Belichtungspausen kann jedoch auch eine Information über eine Frequenz und eine jeweilige Phasenlage von aufeinander folgenden Belichtungszeiten sowie eine Information über eine Dauer einer jeweiligen Belichtungszeit umfassen, so dass hieraus die Zeitpunkte von aufeinanderfolgenden Belichtungspausen indirekt ermittelt werden können.

Die Hintergrund-Wiedergabeeinrichtung kann bei einigen Ausführungsformen eine Vielzahl von aktiv leuchtenden Bildpunktelementen, insbesondere Leuchtdioden, umfassen, die eine zweidimensionale Anordnung bilden.

Insbesondere können die Bildpunktelemente in einer flächigen Anordnung und/oder einem regelmäßigen Raster angeordnet sein. Ferner kann die Hintergrund-Wiedergabeeinrichtung als eine LED ausgebildet sein und eine Vielzahl von Leuchtdioden, insbesondere LED (Light Emitting Diode) oder organische Leuchtdioden bzw. OLED (Organic Light Emitting Diode) umfassen.

Die Hintergrund-Wiedergabeeinrichtung kann bei einigen Ausführungsformen mehrere gleichartige Paneele umfassen, an welchen eine jeweilige Vielzahl von Bildpunktelementen angeordnet ist. Derartige Paneele können insbesondere auch als Panel bezeichnet werden.

Zudem kann die Hintergrund-Wiedergabeeinrichtung die vorstehend im Zusammenhang mit dem Synchronisieren von Belichtungszeiten der Kamera und Lichtimpulsfrequenzen der Hintergrund-Wiedergabeeinrichtung erläuterten Merkmale einer Hintergrund-Wiedergabeeinrichtung für ein virtuelles Bildaufnahmestudio aufweisen.

Bei einigen Ausführungsformen kann die Steuereinrichtung der Hintergrund-Wiedergabeeinrichtung ferner mit einem Speicher verbunden sein, in welchem zumindest eine nächste Darstellung des virtuellen Hintergrunds gespeichert ist, wobei die Steuereinrichtung dazu ausgebildet sein kann, zum Verändern der Darstellung des virtuellen Hintergrunds die gespeicherte nächste Darstellung wiederzugeben.

Beispielsweise kann die Steuereinrichtung dazu einen Treiber zum Steuern eines oder mehrere aktiv leuchtender Bildpunktelemente umfassen, welche einen internen Puffer-RAM umfasst. Der Speicher und/oder der Puffer-RAM kann insofern ein Schattenregister bilden, in welches ein neues Bild bzw. die nächste Darstellung des virtuellen Hintergrunds eingeschrieben werden kann, während eine vorhergehende Darstellung noch wiedergegeben wird. Die nächste Darstellung muss daher nicht erst generiert und über einen langen Pfad an die Steuereinrichtung übertragen werden, sondern kann unmittelbar und synchron über die gesamte Hintergrund-Wiedergabeeinrichtung verändert werden, indem die jeweilige nächste Darstellung in dem Speicher gewissermaßen vorgehalten wird. Insbesondere kann dies ein schnelles Verändern der Darstellung des virtuellen Hintergrunds ermöglichen, um zu erreichen, dass die Darstellung zuverlässig in einer Belichtungspause der zugeordneten Kamera veränderbar ist.

Darüber hinaus betrifft die Erfindung eine Kamera für eine Aufnahme einer Darstellung eines virtuellen Hintergrunds, die in einem virtuellen Bildaufnahmestudio mittels einer zugeordneten Hintergrund-Wiedergabeeinrichtung wiedergegeben wird und sich zu Aktualisierungszeitpunkten ändert. Die Kamera weist eine Schnittstelle auf, welche dazu ausgebildet ist, eine Information über die Aktualisierungszeitpunkte der zugeordneten Hintergrund-Wiedergabeeinrichtung zu empfangen, und die Kamera weist eine Steuereinrichtung auf, welche dazu ausgebildet ist, die Kamera gemäß einer einstellbaren Belichtungszeit zu steuern. Ferner ist die Steuereinrichtung dazu ausgebildet, in Abhängigkeit von der empfangenen Information über die Aktualisierungszeitpunkte Belichtungspausen der Kamera einzustellen.

Die Belichtungspausen der Kamera können insbesondere mittels der Steuereinrichtung direkt oder indirekt einstellbar sein. Jedoch können die Belichtungspausen der Kamera - direkt oder indirekt - insbesondere derart einstellbar sein, dass der Zeitpunkt und die Dauer einer jeweiligen Belichtungspause festgelegt und mit den Aktualisierungszeitpunkten der zugeordneten Hintergrund-Wiedergabeeinrichtung synchronisiert ist. Um die Belichtungspausen indirekt einzustellen, können insbesondere eine Frequenz und eine jeweiligen Phasenlage von aufeinanderfolgenden Belichtungszeiten und/oder Belichtungsfenstern sowie eine Dauer einer jeweiligen Belichtungszeit und/oder eines jeweiligen Belichtungsfensters eingestellt werden. Belichtungspausen können insbesondere mit einer einstellbaren Bildaufnahmefrequenz, einer Frequenz, mit welcher die Kamera Aufnahmen von der Darstellung des virtuellen Hintergrunds erzeugt, periodisch wiederholt werden, wobei jeweilige Zeiträume der aufeinanderfolgenden Belichtungspausen durch die jeweilige Phasenlage der Belichtungspause in Bezug zu einem Beginn einer Bildaufnahme bestimmt sein können.

Die Synchronisation zwischen den Belichtungspausen und den Aktualisierungszeitpunkten kann auch hierbei insbesondere über ein Netzwerk erfolgen, welches die Kamera und die Hintergrund-Wiedergabeeinrichtung umfasst. Wiederum kann insbesondere eine Synchronisation über PTP (Precision Time Protocol) vorgesehen sein.

Die Steuereinrichtung der Kamera ist dazu ausgebildet, die Belichtungspausen der Kamera derart einzustellen, dass während einer jeweiligen Änderung der Darstellung des virtuellen Hintergrunds eine Belichtungspause der Kamera erfolgt. Bei solchen Ausführungsformen kann die Hintergrund-Wiedergabeeinrichtung folglich unbeeinflusst zu dem jeweiligen Aktualisierungszeitpunkt die Darstellung des virtuellen Hintergrunds verändern, wobei die Steuereinrichtung der Kamera die Information über diese Aktualisierungszeitpunkte dazu nutzen kann, die Belichtungspausen der Kamera entsprechend einzustellen. Insbesondere kann dies durch eine entsprechende Phasenverschiebung eines Belichtungsfensters, während dessen eine Belichtung eines lichtempfindlichen Elements der Kamera erfolgt, gegenüber den Aktualisierungszeitpunkten der Hintergrund-Wiedergabeeinrichtung erreicht werden. Die Aktualisierungszeitpunkte der Hintergrund-Wiedergabeeinrichtung sind ferner periodisch durch eine Aktualisierungsfrequenz der Hintergrund-Wiedergabeeinrichtung bestimmt, während die Belichtungspausen durch eine Bildaufnahmefrequenz der Kamera bestimmt sind. Die Bildaufnahmefrequenz und die Aktualisierungsfrequenz können einander entsprechen, wobei die Steuereinrichtung der Kamera auch dazu ausgebildet ist, die Bildaufnahmefrequenz derart einzustellen, dass die Bildaufnahmefrequenz der Aktualisierungsfrequenz der Hintergrund-Wiedergabeeinrichtung oder einem ganzzahligen Vielfachen der Aktualisierungsfrequenz entspricht. Dazu kann die Schnittstelle der Kamera insbesondere auch dazu ausgebildet sein, die Aktualisierungsfrequenz oder eine Information über die Aktualisierungsfrequenz von der Hintergrund-Wiedergabeeinrichtung zu empfangen.

Die Erfindung wird im Folgenden rein beispielhaft anhand von Ausführungsbeispielen in Bezug auf die Zeichnungen erläutert.

Es zeigen:
- Fig. 1: eine schematische Darstellung eines Aufnahmesystems für ein Bildaufnahmestudio mit einer Hintergrund-Wiedergabeeinrichtung zur Wiedergabe einer Darstellung eines virtuellen Hintergrunds und mit einer Kamera,
- Fig. 2: eine schematische Darstellung einer für eine Aufnahme in dem Bildaufnahmestudio vorgesehenen Kamera,
- Fig. 3: eine schematische Darstellung eines Bildsensors der Kamera,
- Fig. 4A und 4B: eine jeweilige schematische Darstellung zur Veranschaulichung eines zeilenweisen Auslesens des Bildsensors und einer zeitlichen Überlagerung des Auslesens mit von der Hintergrund-Wiedergabeeinrichtung zum Wiedergeben der Darstellung des virtuellen Hintergrunds generierten Lichtpulsen,
- Fig. 5A bis 5D: eine jeweilige schematische Darstellung zur Veranschaulichung eines mechanischen rollierenden Objektivverschlusses,
- Fig. 6A und 6B: eine schematische Darstellung zur Veranschaulichung eines zeitlichen Ablaufs zum Verändern der Darstellung des virtuellen Hintergrunds und eines Tearing-Effekts in einer von der Kamera erstellten Abbildung der Darstellung des virtuellen Hintergrunds, und
- Fig. 7A und 7B: eine schematische Darstellung zur Veranschaulichung einer zeitlichen Synchronisation von Belichtungspausen der Kamera mit Aktualisierungszeitpunkten der Hintergrund-Wiedergabeeinrichtung zum Verändern der Darstellung des virtuellen Hintergrunds.

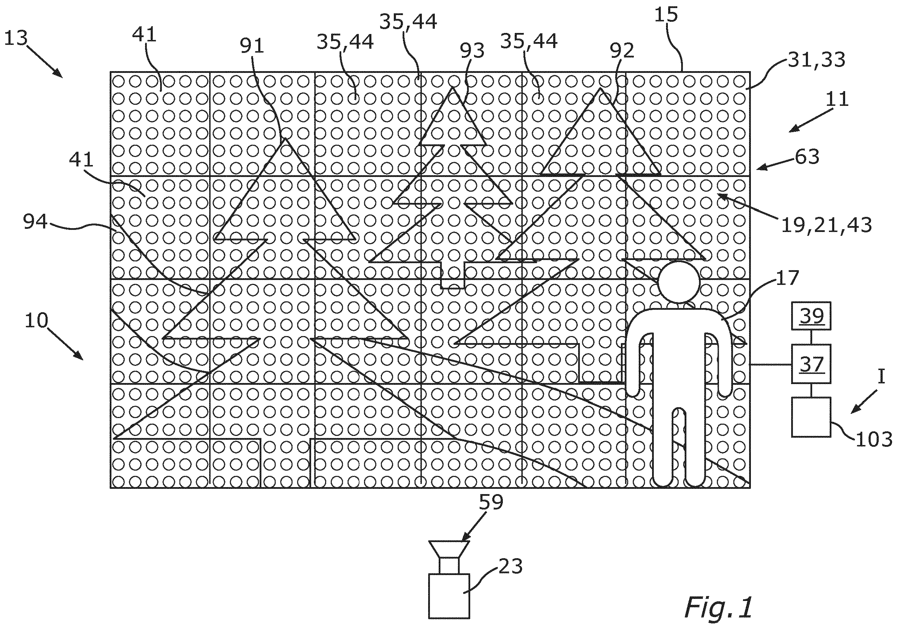

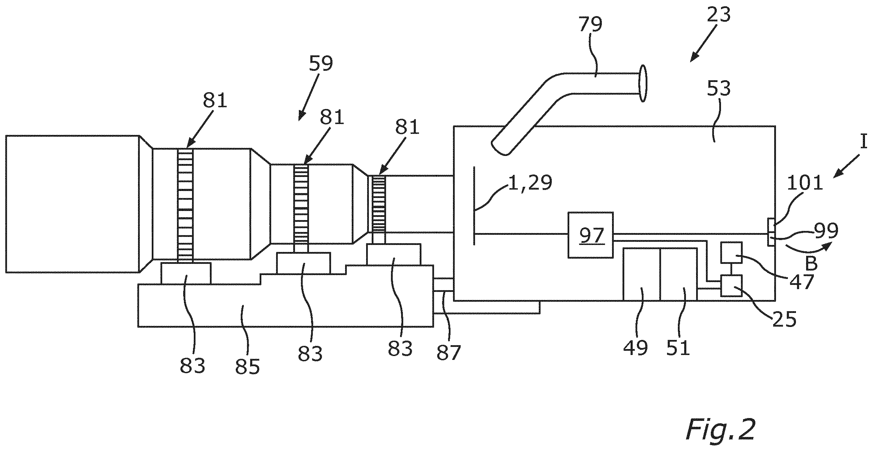

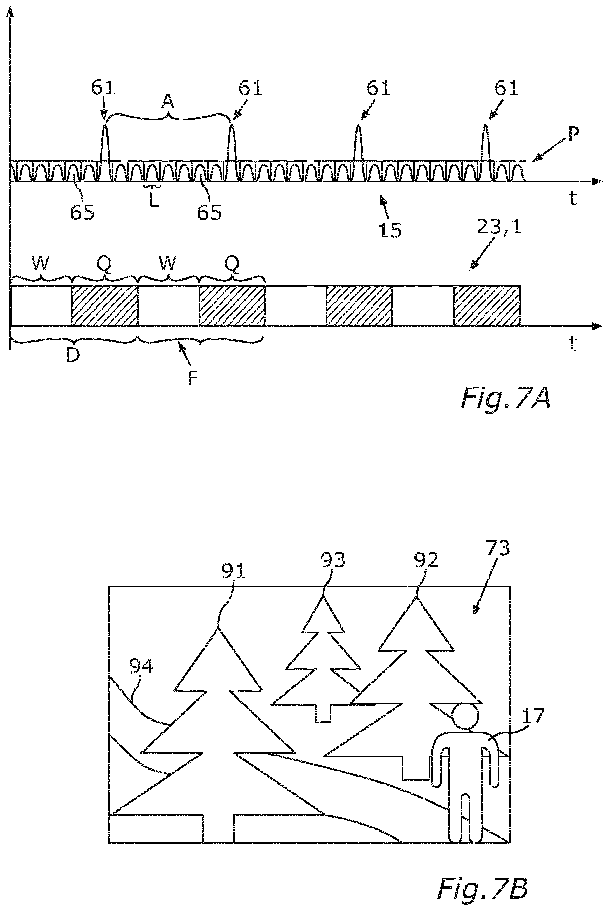

Fig. 1 zeigt schematisch ein virtuelles Bildaufnahmestudio 13, in welchen eine Szene, insbesondere in Form einer Bewegtbildaufnahme und/oder einer Fotoaufnahme, mittels einer zugeordneten Kamera 23 aufgenommen werden kann. Die Kamera 23 kann beispielsweise als Bewegtbildkamera ausgebildet sein, um Bewegtbildaufnahmen durchführen zu können, die als eine Folge von durch die Kamera 23 erzeugten Abbildungen gespeichert werden können. Dazu weist die Kamera 23 ein Objektiv 59 auf, welches insbesondere als Wechselobjektiv ausgebildet sein kann, das wahlweise mit einem Gehäuse der Kamera 23 verbunden werden kann. Dadurch kann stets ein jeweiliges optimal an die Umgebung in dem Bildaufnahmestudio 13 angepasstes Objektiv 59 genutzt werden, um bestmögliche Aufnahmen erstellen zu können. In dem Gehäuse der Kamera 23 kann insbesondere ein Bildsensor 53 mit mehreren lichtempfindlichen Sensorelementen 55 angeordnet sein, auf welche durch eine Blendenöffnung einer Blende eindringendes Licht mittels eines Linsensystems bzw. zumindest einer Linse zum Erzeugen einer Abbildung 73 geleitet werden kann (vgl. auch Fig. 2 und 7B).

Ferner ist in dem Bildaufnahmestudio 13 ein Hintergrundwiedergabesystem 11 mit einer Hintergrund-Wiedergabeeinrichtung 15 angeordnet, welches gemeinsam mit der Kamera 23 ein Aufnahmesystem 10 bildet. Die Hintergrund-Wiedergabeeinrichtung 15 umfasst eine als LED-Wand 33 ausgebildete aktive Beleuchtungseinrichtung 31 und ist dazu ausgebildet, eine Darstellung 19 eines virtuellen Hintergrunds 21 für eine Aufnahme mittels der Kamera 23 wiederzugeben. Dazu weist die Beleuchtungseinrichtung 31 bzw. die LED-Wand 33 eine Vielzahl von aktiv leuchtenden Bildpunktelementen 35 auf, die in einer zweidimensionalen Anordnung nebeneinander angeordnet sind. Beispielsweise können die Bildpunktelemente 35 als individuell ansteuerbare Leuchtdioden 44 oder als individuell ansteuerbare Leuchtdiodeneinheiten ausgebildet sein, wobei jede einer solchen Leuchtdiodeneinheit mehrere, insbesondere drei, Leuchtdioden 44 umfassen kann. Insbesondere kann es vorgesehen sein, dass die Bildpunktelemente 35 als Leuchtdiodeneinheiten mit drei jeweiligen Leuchtdioden 44 ausgebildet sind, wobei eine der drei Leuchtdioden 44 rotes Licht, eine Leuchtdiode 44 grünes Licht und ein Leuchtdiode 44 blaues Licht emittieren kann. Die Leuchtdiodeneinheit kann zudem einen Farbmischer umfassen, um durch jeweiliges individuelles Ansteuern der Leuchtdioden 44 einer Leuchtdiodeneinheit eine jeweilige von dem Bildpunktelement 35 emittierte Farbe und/oder Helligkeit einstellen zu können. Die Leuchtdioden 44 können beispielsweise als LED oder als organische Leuchtdioden 44 bzw. OLED ausgebildet sein. Grundsätzlich können auch Hintergrund-Wiedergabeeinrichtungen zur Wiedergabe einer Darstellung eines virtuellen Hintergrunds in dem Bildaufnahmestudio 13 zum Einsatz kommen, welche die Darstellung mittels einer Rückprojektion erzeugen.

Die Hintergrund-Wiedergabeeinrichtung 15 umfasst eine Vielzahl von Paneelen 41, welche auch als Panels bezeichnet werden können. An jedem Paneel 41 der Vielzahl von Paneelen 41 ist eine jeweilige Vielzahl der aktiv leuchtenden Bildpunktelemente 35 angeordnet, so dass an jedem der Paneele 41 ein Abschnitt der Darstellung 19 des virtuellen Hintergrunds 21 wiedergegeben werden kann. Die Paneele 41 sind insbesondere rechteckig und/oder quadratisch sowie randlos ausgebildet, so dass die Darstellung 19 des virtuellen Hintergrunds 21 auch an den Übergängen zwischen Paneelen 41 ohne sichtbare Unterbrechungen wiedergegeben werden kann. Die Paneele 41 sind ferner in einer zweidimensionalen Matrix angeordnet, um die Hintergrund-Wiedergabeeinrichtung 15 zu bilden.

Die Darstellung 19 des virtuellen Hintergrunds 21 spiegelt hier beispielhaft eine dreidimensionale Szene 43 mit Objekten 91, 92, 93 und 94, drei Bäumen und einem Weg, wider, die durch geeignetes Ansteuern der Bildpunktelement 35, insbesondere geeignetes Einstellen deren jeweiliger Farbe und Helligkeit, erzeugt werden kann. Die dreidimensionale Szene 43 ist dabei auf die im Wesentlichen zweidimensionale Anordnung der Bildpunktelemente 35 der Beleuchtungseinrichtung 31 projiziert, wobei insbesondere die Objekte 91, 92 und 93 in einem unterschiedlichen Abstand zu der Beleuchtungseinrichtung 31 bzw. der Hintergrund-Wiedergabeeinrichtung 11 erscheinen, um die Dreidimensionalität eines dem virtuellen Hintergrund 21 entsprechenden realen Hintergrunds nachzubilden.

Insbesondere dient die Darstellung 19 des virtuellen Hintergrunds 21 mittels der Hintergrund-Wiedergabeeinrichtung 15 dazu, einen Hintergrund für eine Aufnahme eines realen Motivs 17, beispielsweise eines Schauspielers, zu erzeugen, vor welchem eine Aufnahme erfolgen bzw. eine Filmszene gespielt werden kann. Dadurch können in dem Bildaufnahmestudio 13 grundsätzlich beliebige Landschaften, Räume oder Umgebungen geschaffen werden, vor bzw. in welchen eine Szene beispielsweise für einen Kinofilm gedreht werden soll. Zudem ist es möglich, durch eine sich zeitlich verändernde Ansteuerung der Bildpunktelemente 35 Bewegungen in dem virtuellem Hintergrund 21, zum Beispiel ein vorbeifahrendes Auto, darzustellen, auf welche der Schauspieler 17 im Vergleich zu einem Schauspiel vor einem Green-Screen vereinfacht und verbessert reagieren kann.

Die Hintergrund-Wiedergabeeinrichtung 15 erstreckt sich hier im Wesentlichen in der Vertikalen, so dass sich der Schauspieler 17 vor dem virtuellen Hintergrund 21 bewegen kann. Um den virtuellen Hintergrund 21 jedoch umfänglicher darstellen zu können, kann sich die Hintergrund-Wiedergabeeinrichtung 15 auch um den Schauspieler 17 herum oder oberhalb von diesem erstrecken, wobei die Hintergrund-Wiedergabeeinrichtung 15 über dem Schauspieler 17 insbesondere eine horizontale Ausrichtung aufweisen kann. Um den Schauspieler 17 umgeben oder einen Übergang von der gezeigten vertikalen Ausrichtung zu einer horizontalen Ausrichtung erzeugen zu können, kann die Hintergrund-Wiedergabeeinrichtung 15 bzw. die Beleuchtungseinrichtung 31 oder die LED-Wand 33 zumindest abschnittsweise auch gewölbt bzw. gekrümmt sein.

Zusätzlich zu dem Darstellen des virtuellen Hintergrunds 21 kann die Hintergrund-Wiedergabeeinrichtung 15 auch dazu dienen, das reale Motiv 17 zu beleuchten und dadurch beispielsweise eine weitere Studiobeleuchtung des Bildaufnahmestudios 13 unterstützen. Ferner kann durch ein Beleuchten des realen Motivs 17 mittels der Hintergrund-Wiedergabeeinrichtung 15 die Wechselwirkung des realen Motivs 17 bzw. des Schauspielers 17 mit in dem virtuellen Hintergrund 21 vorhandenen Lichtquellen, beispielsweise Laternen oder Lampen, verbessert werden, indem das reale Motiv 17 einen Schatten wirft, der mit den in einer von der Kamera 23 erzeugten Abbildung sichtbaren Lichtverhältnissen korrespondiert.

Um die Darstellung 19 des virtuellen Hintergrunds 21 erzeugen und die Bildpunktelemente 35 zur Wiedergabe der Darstellung ansteuern zu können, weist die Hintergrund-Wiedergabeeinrichtung 15 eine Steuereinrichtung 37 auf (z.B. Mikroprozessor oder Central Processing Unit, CPU), welche mit einem Speicher 39 verbunden ist. In dem Speicher 39 kann insbesondere ein Modell des virtuellen Hintergrunds 21 gespeichert sein, so dass die Steuereinrichtung 37 den virtuellen Hintergrund 21 anhand des Modells generieren kann. Ferner kann die Steuereinrichtung 37 dazu ausgebildet sein, den virtuellen Hintergrund 21 auf die Hintergrund-Wiedergabeeinrichtung 15 und insbesondere die zweidimensionale Anordnung der Bildpunktelemente 35 zu projizieren.

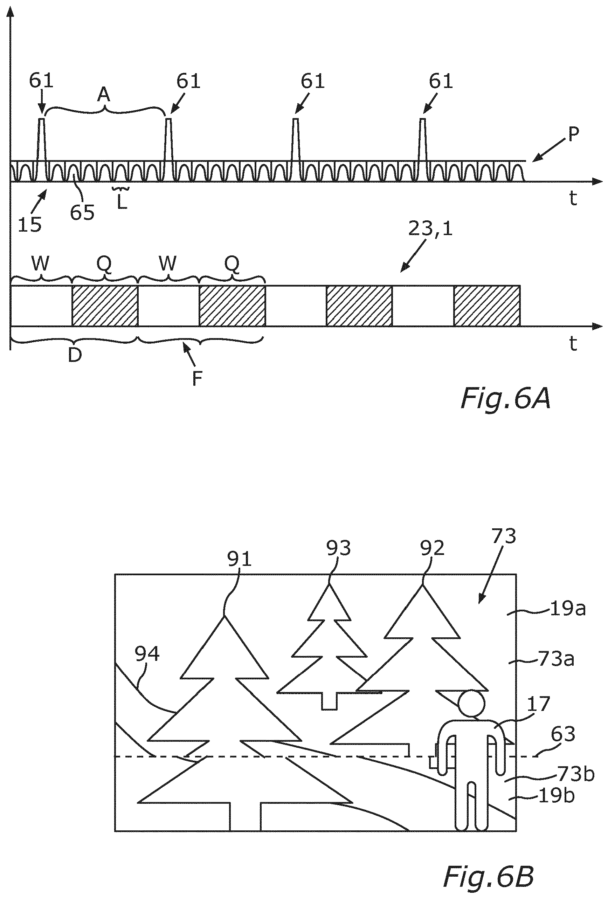

Um zudem sich zeitlich verändernde Darstellungen 19 des virtuellen Hintergrunds 21 an der Hintergrund-Wiedergabeeinrichtung 15 möglichst unmittelbar und ohne Zeitverlust wiedergegeben zu können, kann in dem Speicher 39 ferner zumindest eine nächste Darstellung 19b gespeichert sein, wobei die Steuereinrichtung 37 dazu ausgebildet sein kann, zum Verändern der Darstellung 19 des virtuellen Hintergrunds 21 die in dem Speicher 37 gespeicherte nächste Darstellung 19b wiederzugeben (vgl. auch Fig. 6B). Insbesondere muss die nächste Darstellung 19b somit nicht erst generiert werden, wenn die Wiedergabe erfolgen soll, sondern die Steuereinrichtung 37 kann die Bildpunktelemente 35 unmittelbar zur Wiedergabe der nächsten Darstellung 19b ansteuern. Beispielsweise kann die Steuereinrichtung 37 dazu ausgebildet sein, während der Wiedergabe einer Darstellung 19 die nächste Darstellung 19b des virtuellen Hintergrunds 21 anhand des in dem Speicher 39 gespeicherten Modells zu generieren und in den Speicher 39 einzuschreiben, um unmittelbar auf die nächste Darstellung 19b zugreifen zu können, wenn die Wiedergabe erforderlich ist.

Um ferner eine Kommunikation zwischen den Komponenten des Aufnahmesystems 10 zu ermöglichen, weist die Hintergrund-Wiedergabeeinrichtung 15 eine Schnittstelle 103 auf, über welche Informationen I von der zugeordneten Kamera 23 empfangbar sind. Diese Informationen I können beispielsweise unmittelbar von der Kamera 23 über eine kabellose und/oder kabelgebundene Verbindung übermittelbar oder durch eine Benutzereingabe an der Schnittstelle 103 eingebbar sein. Insbesondere kann über die Schnittstelle 103 eine Information I über eine Belichtungszeit E und/oder eine Belichtungspause Q zwischen zwei Belichtungen der zugeordneten Kamera 23 an die Hintergrund-Wiedergabeeinrichtung 15 übertragbar sein, wie nachstehend noch näher erläutert ist.

Eine mögliche Ausführung der zugeordneten Kamera ist in Fig. 2 schematisch gezeigt. Die Kamera 23 weist einen Kamerakörper 53 auf, an welchem ein Objektiv 59 befestigt ist. Das Objektiv 59 kann dabei insbesondere als Wechselobjektiv ausgebildet sein, so dass wahlweise verschiedenartig ausgebildete Objektive 59 mit dem Kamerakörper 53 verbunden werden können und stets ein für eine jeweilige Aufnahme optimales Objektiv 59 gewählt werden kann. Das Objektiv 59 weist drei Objektivringe 81 auf, mittels derer jeweilige Parameter des Objektivs 59 eingestellt werden können. Beispielsweise können eine Fokusentfernung, eine Brennweite, ein Zoom-Faktor und/oder eine Blendenöffnung, insbesondere eine Öffnung einer Irisblende, durch Drehen eines jeweiligen der Objektivringe 81 einstellbar bzw. anpassbar sein. Die Kamera 23 kann insbesondere als Laufbildkamera oder Bewegtbildkamera ausgebildet sein, um aufeinanderfolgend eine Sequenz von Abbildungen 73 erzeugen zu können, die beispielsweise als ein Film abgespielt werden kann.

Um die Objektivringe 81 einstellen zu können, ist eine Objektivring-Antriebseinheit 85 über eine Haltestange 87 mit dem Kamerakörper 53 verbunden, welche für jeden der Objektivringe 81 einen jeweiligen Objektiv-Stellmotor 83 aufweist. Mittels dieser Objektiv-Stellmotoren 83 können die Objektivringe 81 gedreht und dadurch Einstellungen an dem Objektiv 59 vorgenommen werden. Insbesondere kann die Objektivring-Antriebseinheit 85 ferngesteuert betätigbar sein, so dass die genannten Objektivparameter ferngesteuert eingestellt bzw. verändert werden können.

An dem Kamerakörper 53 ist eine ferner Wiedergabeeinrichtung 49 angeordnet, über welche einem Benutzer Informationen I zu Einstellungen der Kamera 23 angezeigt werden können. Bei der Wiedergabeeinrichtung 49 kann es sich insbesondere um ein Display handeln. Zudem weist die Kamera 23 eine an dem Kamerakörper 53 angeordnete Eingabeeinrichtung 51 auf, über welche der Benutzer Einstellungen der Kamera 23 vornehmen kann. Insbesondere kann an der Eingabeeinrichtung 51 eine Belichtungszeit E der Kamera 23 einstellbar sein, wobei eine mit der Eingabeeinrichtung 51 verbundene Steuereinrichtung 25 dazu ausgebildet sein kann, die Kamera 23 gemäß der eingegebenen Belichtungszeit E zu steuern. Insbesondere können die Wiedergabeeinrichtung 49 und die Eingabeeinrichtung 51 von einem Touchscreen gebildet sein, über welchen dem Benutzer sowohl Informationen I angezeigt als auch Benutzereingaben empfangen werden können.

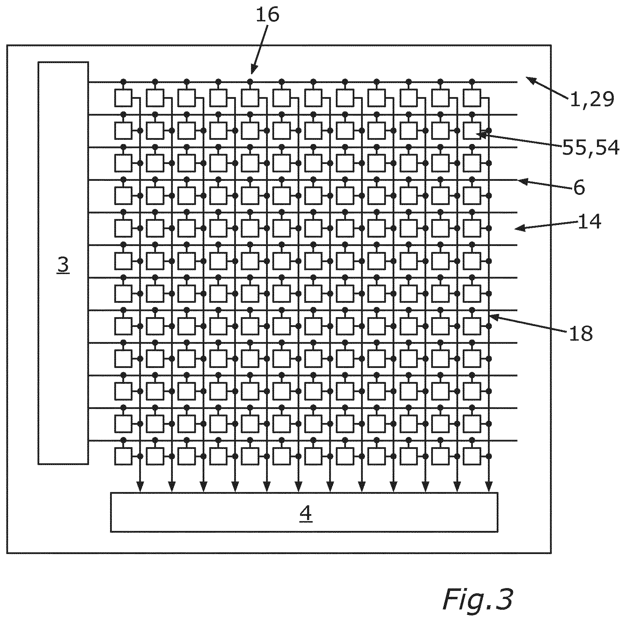

Um durch das Objektiv 59 eintreffendes Licht abbilden zu erzeugen, weist die Kamera 23 ferner einen innerhalb des Kamerakörpers 53 angeordneten Bildsensor 1 auf. Dieser Bildsensor 1 kann beispielsweise auf der CMOS-Technologie oder der CCD-Technologie basierend ausgebildet sein und eine Vielzahl von lichtempfindlichen Sensorelementen 55 aufweisen, die in mehreren Zeilen 14 und Spalten 16 angeordnet sein können (vgl. auch Fig. 3). Ferner weist die Kamera 23 eine Ausleseschaltung 97 auf, welche dazu ausgebildet ist, die Signale der jeweiligen Sensorelemente 55 auszulesen, aufzubereiten, zu digitalisieren und an bzw. über einen Signalausgang 99 auszugeben. Dazu kann die Ausleseschaltung 97 insbesondere Verstärker, Multiplexer, Analog-Digital-Wandler, Pufferspeicher und/oder Mikrocontroller umfassen. Letztlich kann somit von der Kamera 23 ein Bilddatensatz B erzeugt werden, welcher der Abbildung bzw. einer Abbildung eines Gesichtsfelds der Kamera 23 entspricht, und der Bilddatensatz B kann über den Signalausgang 99 ausgegeben werden. Um das Gesichtsfeld der Kamera 23 überprüfen und die Kamera 23 auf einen jeweiligen Bildausschnitt ausrichten zu können, ist an dem Kamerakörper 53 ferner ein Sucher 79 angeordnet, durch welchen ein Kameramann hindurchsehen kann.

Darüber hinaus weist die Kamera 23 eine Schnittstelle 101 zum Empfang von Informationen I und/oder Daten von der Hintergrund-Wiedergabeeinrichtung 15 auf, wobei wiederum eine kabellose und/oder kabelgebundene Kommunikation oder eine Benutzereingabe vorgesehen sein kann. Insbesondere kann die empfangene Information I Aktualisierungszeitpunkte 61, zu welchen die Hintergrund-Wiedergabeeinrichtung 15 die Darstellung 21 des virtuellen Hintergrunds 21 verändert, oder eine Lichtpulsfrequenz P der Hintergrund-Wiedergabeeinrichtung 15 umfassen, gemäß welcher die Hintergrund-Wiedergabeeinrichtung 15 die Darstellung 19 des virtuellen Hintergrund 21 intermittierend wiedergibt. Auch dies ist nachstehend noch näher erläutert.

Fig. 3 zeigt eine beispielhafte Darstellung des Bildsensors 1 der Kamera 23. Der Bildsensor 1 weist eine Vielzahl von in Zeilen 14 und Spalten 16 angeordneten Pixeln 54 auf, wobei jedes Pixel 54 ein lichtempfindliches Sensorelement 55 bildet, um während einer Belichtung auftreffendes Licht in elektrische Ladung umzuwandeln (vgl. Fig. 3). Das Auslesen eines solchen Bildsensors 1 kann beispielsweise zeilenweise erfolgen, wozu eine Zeilenaddressierlogik 3 vorgesehen ist. Die Sensorelemente 55 einer Zeile 12 können dazu über eine Zeilenauswahlleitung 6 mit einer jeweiligen Spaltenleitung 18 gekoppelt werden, welche den in einer Spalte 16 angeordneten Pixeln 54 zugeordnet ist. Über die Spaltenleitungen 18 können die Signale der lichtempfindlichen Sensorelemente 55 einer Zeile 14 an einen Spaltenverstärker 4 übermittelt werden, mittels dessen die erzeugten Signale verstärkt und daraufhin weiterverarbeitet, insbesondere digitalisiert, werden können.

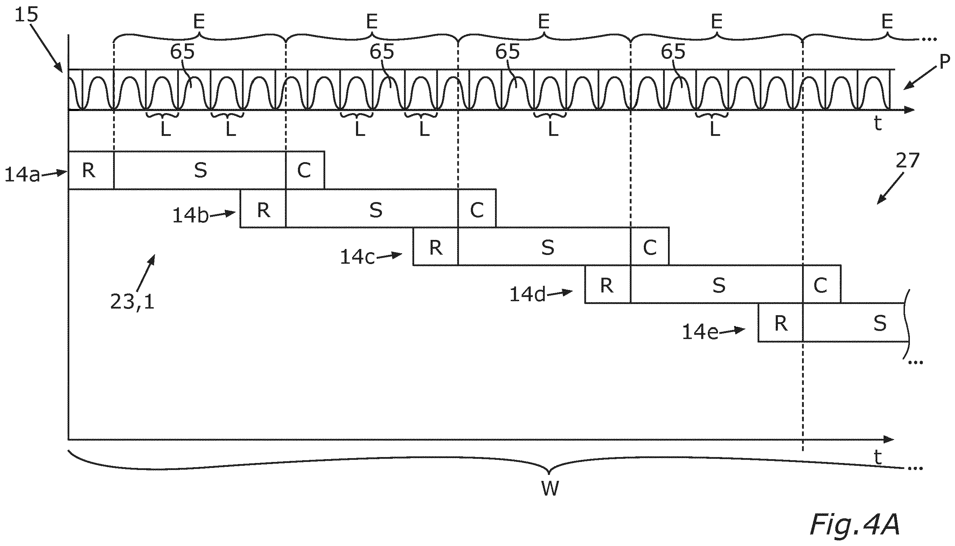

Der zeitliche Ablauf bezüglich einer Zeit t eines solchen zeilenweisen Auslesens des Bildsensors 1 ist im unteren Abschnitt von Fig. 4A veranschaulicht. Das Auslesen des Bildsensors erfolgt derart, dass zunächst in einer ersten Zeile 14a des Bildsensors 1 die Ladungen der lichtempfindlichen Sensorelemente 55 in einem Schritt R zurückgesetzt bzw. gelöscht werden, um zu erreichen, dass ausschließlich während einer definierten Belichtungszeit E auf die Sensorelemente 55 auftreffendes Licht in dem von der Kamera 23 ausgegebenen Bilddatensatz B berücksichtigt wird. Nachdem die Sensorelemente 55 zurückgesetzt wurden, werden die in der Zeile 14a angeordneten Sensorelemente 55 für die Belichtungszeit E belichtet, so dass in dem währenddessen erfolgenden Schritt S in Abhängigkeit von dem während der Belichtungszeit E auftreffenden Licht an den Sensorelementen 55 elektrische Ladung generiert wird. Nach der definierten Belichtungszeit E folgt in der zunächst angesteuerten Zeile 14a ein Schritt C, in welchem die an den Sensorelementen 55 der Zeile 14a während der Belichtungszeit E generierten elektrischen Ladungen ausgelesen werden. Dazu kann die Zeile 14 mit der Spaltenleitung 18 gekoppelt werden (vgl. auch Fig. 3).

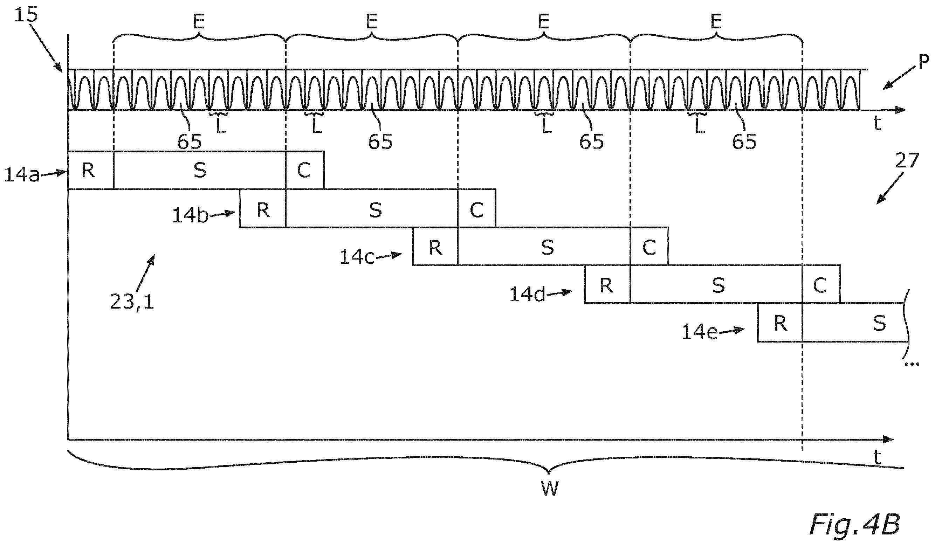

Um die Auslesezeit für den Bildsensor 1 möglichst zu minimieren, werden die in der darauffolgenden Zeile 14b angeordneten Sensorelemente 55 bereits in dem Schritt R zurückgesetzt, während an den Sensorelementen 55 der Zeile 14a noch Ladung generiert wird. Dabei ist das Zurücksetzen R der Zeile 14b derart auf die Belichtungszeit E abgestimmt, dass das Zurücksetzen R der Sensorelemente 55 in der Zeile 14b gerade dann beendet ist, wenn bei den Sensorelementen 55 der Zeile 14a der Schritt S zum Generieren der elektrischen Ladung abgeschlossen ist. Dies ermöglicht es, die Sensorelemente 55 der Zeile 14b, wiederum für die Belichtungszeit E, zu belichten, sobald für die Sensorelementen 55 der Zeile 14a das Auslesen C der generierten elektrischen Ladung beginnt, und die Sensorelenente 55 der Zeile 14b nach der Belichtungszeit E durch Koppeln mit der Spaltenleitung 18 auszulesen. Diese Schritte R, S und C zum Auslesen des Bildsensors 1 werden sodann in den folgenden Zeilen 14c, 14d und 14e sowie den weiteren, in Fig. 4 nicht dargestellten Zeilen 14 des Bildsensors 1 sukzessive durchgeführt, um schließlich eine Abbildung 73 der Darstellung 19 des virtuellen Hintergrunds 21 bzw. einen Bilddatensatz B zu generieren.

Aufgrund dieses zeilenweisen Auslesens des Bildsensors 1 wird die Kamera 23 mit einem elektronischen rollierenden Objektivverschluss 27 bzw. elektronischem Rolling Shutter betrieben, da die einzelnen Zeilen 14a, 14b, 14c, 14d und 14e zeitversetzt zueinander belichtet werden und die jeweiligen Belichtungszeiten E der einzelnen Zeilen 14a, 14b, 14c, 14d und 14e gegeneinander um die Belichtungszeit E verschoben sind. Insbesondere bei einer Verwendung der Kamera 23 zum Erstellen von Bewegtbildaufnahmen kann ein solcher elektronischer rollierender Verschluss 27 vorgesehen sein, um in von der Kamera 23 generierten Abbildungen 73 bzw. in einer Abfolge solcher Abbildungen 73 einen natürlichen Bewegungsablauf darstellen zu können. Bei einem solchen rollierenden Objektivverschluss 27 kann dem Bildsensor 1 zusätzlich zu der Belichtungszeit E, mit welcher die einzelnen Zeilen 14a, 14b, 14c, 14d und 14e belichtet werden, auch ein Belichtungsfenster W zugeordnet werden, welches die Dauer bzw. das Zeitintervall von dem Anfangszeitpunkt der Belichtung eines ersten Sensorelements 55 oder der ersten Zeile 14a bis zu einem Endzeitpunkt der Belichtung eines letzten Sensorelements 55 oder einer letzten Zeile 14 des Bildsensors definiert. Das Belichtungsfenster W des Bildsensors 1 ist insofern bei dem in Fig. 4A dargestellten elektronischen rollierenden Objektivverschluss 27 länger als die Belichtungszeit E.

Im oberen Abschnitt der Fig. 4A ist zudem veranschaulicht, dass die Steuereinrichtung 37 der Hintergrund-Wiedergabeeinrichtung 15 dazu ausgebildet sein kann, die Hintergrund-Wiedergabeeinrichtung 15 zu einer intermittierenden Wiedergabe der Darstellung 19 des virtuellen Hintergrunds 21 gemäß einer einstellbaren Lichtimpulsfrequenz P anzusteuern. Insofern kann die Darstellung 19 gewissermaßen pulsierend wiedergegeben werden, wobei während jeder Belichtungszeit E eine Mehrzahl von Lichtpulsen 65 wiedergegeben werden kann, so dass eine Lichtpulsdauer L der einzelnen Lichtpulse 65 geringer als die Belichtungszeit E der Zeilen 14 des Bildsensors 1 sein kann. Die Lichtimpulsfrequenz P kann zudem insbesondere mit einer Bildaufnahmefrequenz F der Kamera 23 synchronisiert sein, indem die Lichtpulsfrequenz P einem Vielfachen der Bildaufnahmefrequenz F entsprechen kann (vgl. auch Fig. 6A und 7A). Die Bildaufnahmefrequenz F der Kamera 23 kann beispielsweise auch als Frame-Rate bezeichnet werden und angeben, wie viele Abbildungen die zugeordnete Kamera 23 pro Sekunde erzeugt. Beispielsweise kann es bei einer gängigen Bildaufnahmefrequenz von 24 fps bzw. 24 Hz vorgesehen sein, dass die Lichtimpulsfrequenz P 1920 Hz oder 3840 Hz entspricht.

Während die Lichtimpulsfrequenz P also mit der Bildaufnahmefrequenz F der Kamera 23 synchronisiert sein kann, ist die Belichtungszeit E der Kamera 23 grundsätzlich frei wählbar und ist nicht unmittelbar durch die Bildaufnahmefrequenz F oder eine Bildaufnahmezeit D, die dem Reziproken der Bildaufnahmefrequenz F entspricht, vorgegeben. Dementsprechend liegt auch bei einer Abstimmung zwischen der Lichtpulsfrequenz P und der Bildaufnahmefrequenz F grundsätzlich keine unmittelbare Synchronisation zwischen der Belichtungszeit E und der Lichtpulsfrequenz P vor. Dies kann jedoch, wie Fig. 4A veranschaulicht, insbesondere bei einem Rolling Shutter 27 dazu führen, dass jede der Zeilen 14a, 14b, 14c, 14d und 14e des Bildsensors 1 eine unterschiedliche Anzahl von Lichtpulsen 65 bzw. unterschiedliche Anteile unvollständiger Lichtpulse 65 während der jeweiligen Belichtungszeit E registriert. Die Zeilen 14a, 14b, 14c, 14d und 14e des Bildsensors 1 können somit unterschiedlich stark durch die Hintergrund-Wiedergabeeinrichtung 15 belichtet werden, so dass sich in der von der Kamera 23 erzeugten Abbildung 73 der Darstellung 19 des virtuellen Hintergrunds 21 ungewünschte Helligkeitsmodulationen zeigen können, indem beispielsweise unterschiedliche Zeilen der Abbildung 73 unterschiedliche Helligkeiten aufgrund der unterschiedlichen Anzahl erfasster Lichtpulse 65 aufweisen können.

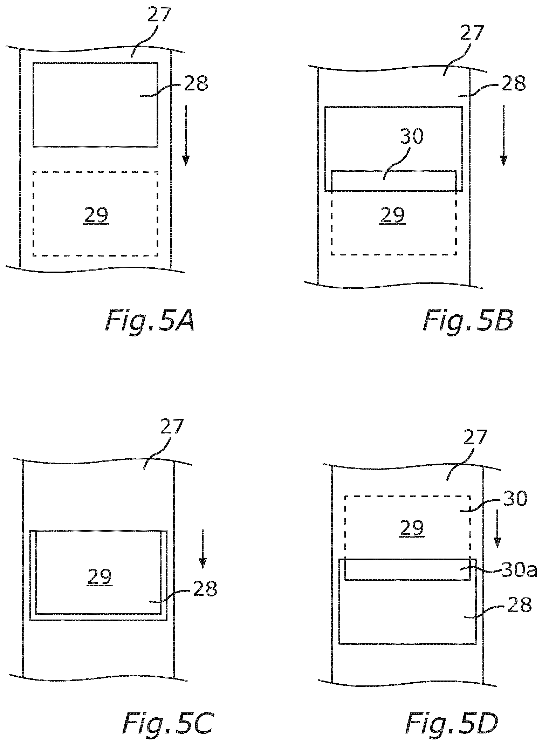

Die gleiche Problematik kann sich grundsätzlich auch bei einer Kamera 23 mit einem mechanischen rollierenden Objektivverschluss 27 ergeben, wie anhand der Fig. 5A bis 5D veranschaulicht ist. Bei einem solchen mechanischen rollierenden Objektivverschluss 27 kann eine Öffnung 28 vorgesehen sein, welche sukzessive über ein lichtempfindliches Element 29 der Kamera 23, beispielsweise einen Bildsensor oder einen Film, gefahren wird, so dass verschiedene Bereiche 30 und 30a des lichtempfindlichen Elements 29 zu unterschiedlichen Zeitpunkten von der Öffnung 28 für einen Lichteinfall freigegeben werden. In Fig. 5A ist das lichtempfindliche Element 29 dabei vollkommen von dem Objektivverschluss 27 bedeckt, während der Objektivverschluss 27 in Fig. 5B bereits soweit entlang der Richtung eines Pfeils 105 bewegt wurde, dass ein erster Bereich 30 des lichtempfindlichen Element 29 belichtet werden kann. In Fig. 5C ist das gesamte lichtempfindliche Element 29 in Flucht zu der Öffnung 28 angeordnet, so dass das gesamte lichtempfindliche Element 29 von Licht beaufschlagt wird. In Fig. 5D ist der Objektivverschluss 27 hingegen wiederum weiterbewegt, so dass der erste Bereich 30 bereits durch den Verschluss 27 überdeckt ist, wohingegen ein letzter Bereich 30a des lichtempfindlichen Elements 29 noch belichtet werden kann. Auch bei einem solchen mechanischen rollierenden Objektivverschluss 27 werden somit die Bereiche 30 und 30a zwar für dieselbe Belichtungszeit E, jedoch zu unterschiedlichen Zeitpunkten belichtet, so dass auch hierbei die vorstehend erläuterte Modulation aufgrund unterschiedlicher Anzahlen registrierter Lichtpulse 65 bzw. unterschiedlicher Anteile nicht vollständig registrierter Lichtpulse 65 an den Bereichen 30 und 30a in einer von der Kamera 23 erzeugten Abbildung 73 entstehen kann.

Um diesem Problem zu begegnen, kann es insbesondere vorgesehen sein, die Belichtungszeit E der Kamera 23 in Abhängigkeit von der Lichtimpulsfrequenz P der Hintergrund-Wiedergabeeinrichtung 15 oder die Lichtimpulsfrequenz P der Hintergrund-Wiedergabeeinrichtung 15 in Abhängigkeit von der Belichtungszeit E der Kamera 23 derart einzustellen, dass die Belichtungszeit E einem ganzzahligen Vielfachen des Reziproken der Lichtimpulsfrequenz P entspricht. Insbesondere kann die Belichtungszeit E entsprechend derart eingestellt werden, dass die Belichtungszeit E einem ganzzahligen Vielfachen einer Lichtpulsdauer L entspricht, wobei dieses ganzzahlige Vielfache insbesondere größer als Eins sein kann. Dies ist anhand der Fig. 4B veranschaulicht.

Wie Fig. 4B zeigt, kann durch eine derartige Anpassung der Belichtungszeit E erreicht werden, dass während jeder Belichtungszeit E eine ganzzahlige Anzahl vollständiger Lichtpulse 65 registriert wird, die insbesondere größer als Eins sein kann. In der gezeigten Darstellung ist die Synchronisation zwischen der Belichtungszeit E bzw. jeweiliger Startpunkte der Belichtung in den Zeilen 14a, 14b, 14c, 14d und 14e und den Lichtpulsen 65 derart gewählt, dass die Sensorelemente 55 jeder Zeile 14 des Bildsensors 1 eine ganzzahlige Anzahl stets vollständiger Lichtpulse 65 registriert. Auch wenn der Beginn der Belichtungszeit E jedoch gegenüber dem Beginn eines Lichtpulses 65 verschoben ist, also ein Teil des ersten in einer Zeile 14 registrierten Lichtpulses 65 abgeschnitten ist, kann durch die Wahl der Belichtungszeit E derart, dass die Belichtungszeit E einem ganzzahligen Vielfachen des Reziproken der Lichtimpulsfrequenz P entspricht, erreicht werden, dass gerade der zu Beginn der Belichtungszeit E abgeschnittene Teil eines Lichtpulses 65 zum Ende der Belichtungszeit E in der jeweiligen Zeile 14 und entsprechend in jeder der Zeilen 14 des Bildsensors 1 noch registriert wird. Insofern kann durch eine derartige Wahl der Belichtungszeit E sichergestellt werden, dass in jeder Zeile 14 des Bildsensors 1 dieselbe Anzahl vollständiger Lichtpulsen 65 registriert wird und die vorstehend erläuterten Modulationen in der Abbildung 73, welche die Kamera 23 von der Darstellung 19 des virtuellen Hintergrunds 21 erzeugt, können vermieden werden.

Wie vorstehend bereits erwähnt, kann, um eine solche Einstellung der Belichtungszeit E und/oder der Lichtimpulsfrequenz P zu ermöglichen, die Kamera 23 eine Schnittstelle 101 zum Empfangen von Informationen I von der Hintergrund-Wiedergabeeinrichtung 15 aufweisen. Zudem kann die Hintergrund-Wiedergabeeinrichtung 15 eine Schnittstelle 103 zum Empfangen von Informationen I von der Kamera 23 aufweisen. Beispielsweise kann es vorgesehen sein, dass die Steuereinrichtung 25 der Kamera 23 dazu ausgebildet ist, in Abhängigkeit von einem empfangenen Wert der Lichtimpulsfrequenz P mehrere zulässige Belichtungszeiten E zu bestimmen. Insofern kann über die Schnittstelle 101 und die Information I die Lichtimpulsfrequenz P an die Steuereinrichtung 25 der Kamera 23 übermittelbar sein, wobei dies beispielsweise unmittelbar durch eine Kommunikation mit der Hintergrund-Wiedergabeeinrichtung 15 oder durch eine Benutzereingabe erfolgen kann. Die Steuereinrichtung 25 kann sodann dazu ausgebildet sein, die zulässigen Belichtungszeiten E als solche Belichtungszeiten E zu bestimmen, die einem ganzzahligen Vielfachen des Reziproken der Lichtimpulsfrequenz P bzw. einem ganzzahligen Vielfachen der Lichtpulsdauer L entsprechen. Dazu kann die Steuereinrichtung 25 beispielsweise dazu ausgebildet sein, die zulässigen Belichtungszeiten E zu berechnen oder in einem Speicher 47, mit welchem die Steuereinrichtung 25 verbunden ist, nachzuschlagen. Wie bereits erläutert, kann für solche zulässigen Belichtungszeiten E erreicht werden, dass in jeder Zeile 14 des Bildsensors 1 bzw. in jedem Bereich 30 oder 30a eines lichtempfindlichen Elements 29 dieselbe Anzahl an Lichtpulsen 65 registriert wird. So ergibt sich beispielsweise bei einer Bildaufnahmefrequenz von 24 fps bzw. 24 Hz und einer Lichtimpulsfrequenz P von 1920 Hz, das insgesamt 80 Lichtpulse 65 pro aufgenommenem Bild von der Hintergrund-Wiedergabeeinrichtung 15 generiert werden, so dass sich in diesem Fall 80 zulässige Belichtungszeiten E mit einer jeweiligen Dauer von n x 1/1920 Hz, wobei n gleich 1 bis 80 gilt, ermitteln lassen.

Um eine derart ermittelte zulässige Belichtungszeit an der Kamera 23 auch einzustellen, kann die Steuereinrichtung 25 der Kamera 23 beispielsweise dazu ausgebildet sein, automatisch eine zulässige Belichtungszeit E einzustellen. Beispielsweise kann die Steuereinrichtung 25 diejenige zulässige Belichtungszeit E einstellen, welche einer aktuell eingestellten Belichtungszeit E am nächsten ist. Ferner kann die Steuereinrichtung 25 auch dazu ausgebildet sein, die bestimmten zulässigen Belichtungszeiten E an der Wiedergabeeinrichtung 49 der Kamera 23 anzuzeigen, so dass ein Benutzer selbst, insbesondere mittels der Eingabeeinrichtung 51, eine der zulässigen Belichtungszeiten E auswählen und an die Steuereinrichtung 25 übermitteln kann. Die Steuereinrichtung 25 kann daraufhin die eingestellte zulässige Belichtungszeit E an der Kamera 21 einstellen. Die Steuereinrichtung 25 kann jedoch auch dazu ausgebildet sein, eine von einem Benutzer an der Eingabeeinrichtung 51 eingestellte Belichtungszeit E lediglich dann einzustellen, wenn diese eingestellte Belichtungszeit E einer zulässigen Belichtungszeit E entspricht. Andernfalls kann die Steuereinrichtung 25 beispielsweise diejenige zulässige Belichtungszeit E einstellen, welche der von dem Benutzer eingestellten Belichtungszeit E am nächsten ist. Es kann jedoch auch vorgesehen sein, dass nach einem Bestimmen zulässiger Belichtungszeiten E mittels der Eingabeeinrichtung 51 ausschließlich zulässige Belichtungszeiten E an der Eingabeeinrichtung 51 einstellbar sind. Dazu kann an der Wiedergabeeinrichtung 49 beispielsweise ein Raster zulässiger Belichtungszeiten E angezeigt werden, aus welchen der Benutzer über die Eingabeeinrichtung 51 auswählen kann. Es kann auch vorgesehen sein, dass mittels der Eingabeeinrichtung 51 Belichtungszeiten E schrittweise einstellbar sind, wobei die Steuereinrichtung 25 dazu ausgebildet sein kann, die Schritte auf zulässige Belichtungszeiten E einzustellen.

Alternativ zu einer Einstellung der Belichtungszeit E an der Kamera 23 kann es auch vorgesehen sein, dass die Steuereinrichtung 37 der Hintergrund-Wiedergabeeinrichtung 15 über die Schnittstelle 103 eine Information I über die Belichtungszeit E der Kamera 23 erhält und die Lichtimpulsfrequenz P in Abhängigkeit von dem Wert der empfangenen, an der Kamera 23 eingestellten Belichtung E einstellt. Beispielsweise kann die Steuereinrichtung 37 der Hintergrund-Wiedergabeeinrichtung 15 dazu ausgebildet sein, die Lichtimpulsfrequenz P derart einzustellen, dass die Lichtimpulsfrequenz P einem ganzzahligen Vielfachen des Reziproken des empfangenen Werts der eingestellten Belichtungszeit E entspricht. Auch durch eine solche Einstellung der Lichtimpulsfrequenz P kann erreicht werden, dass letztlich eine ganzzahlige Anzahl von Lichtpulsen 65 während der eingestellten Belichtungszeit E in jeder der Zeilen 14 des Bildsensors 1 der Kamera 23 registriert wird. Eine Anpassung der Lichtimpulsfrequenz P an der Hintergrund-Wiedergabeeinrichtung 15 ermöglicht es zudem, dass ein Kameramann die Belichtungszeit E frei und ohne Einschränkung an der Kamera 23, beispielsweise mittels der Eingabeeinrichtung 51, einstellen kann, wobei durch eine Anpassung der Lichtpulsfrequenz P an der Hintergrund-Wiedergabeeinrichtung 15 dafür Sorge getragen werden kann, dass bei der eingestellten Belichtungszeit E jede Zeile 14 eines Bildsensors 1 bzw. jeder Bereich 30 oder 30a eines lichtempfindlichen Elements 29 der Kamera 23 dieselbe Anzahl von Lichtpulsen 65 während einer Belichtung registriert. Die Einstellung der Lichtpulsfrequenz P kann wiederum automatisch erfolgen, oder es können verschiedene zulässige Lichtpulsfrequenzen angezeigt werden, um einem Benutzer das Einstellen einer zulässigen Lichtpulsfrequenz zu ermöglichen.

Ein weiteres Problem hinsichtlich der Synchronisation zwischen der Hintergrund-Wiedergabeeinrichtung 15 und der Kamera 23 kann sich dadurch ergeben, dass die Hintergrund-Wiedergabeeinrichtung 15 dazu ausgebildet sein kann, sich verändernde Darstellungen 19 des virtuellen Hintergrunds 21 wiederzugeben. Beispielsweise kann es vorgesehen sein, dass die Steuereinrichtung 37 der Hintergrund-Wiedergabeeinrichtung 15 dazu ausgebildet ist, die Darstellung 19 mit einer vorgegebenen oder einstellbaren Aktualisierungsfrequenz A zu verändern, um beispielsweise Bewegungen in dem virtuellen Hintergrund 21 darstellen zu können. Dazu kann die Darstellung 19, wie Fig. 6A veranschaulicht, zu jeweiligen Aktualisierungszeitpunkten 61 verändert werden. Wiederum kann die Aktualisierungsfrequenz A insbesondere mit der Bildaufnahmefrequenz F der Kamera 23 synchronisiert sein, so dass grundsätzlich jeder Abbildung 73, welche die Kamera 23 von der Darstellung 19 des virtuellen Hintergrunds 21 erzeugt, eine jeweilige Darstellung 19 des virtuellen Hintergrunds 21 zugeordnet werden kann.

Auch hierbei ergibt sich jedoch die Problematik, dass das vorstehend bereits erwähnte Belichtungsfenster W der Kamera 23, also ein Zeitfenster, währenddessen zumindest ein jeweiliger Bereich 30 oder 30a eines lichtempfindlichen Elements 29 bzw. eine Zeile 14 eines Bildsensors 1 mit Licht beaufschlagt wird, durch die eingestellte Belichtungszeit E vorgegeben und nicht grundsätzlich mit der Bildaufnahmefrequenz F bzw. der Bildaufnahmedauer D gekoppelt ist. Daher kann es, auch wenn die Aktualisierungsfrequenz A der Hintergrund-Wiedergabeeinrichtung 15 mit der Bildaufnahmefrequenz F der Kamera 23 synchronisiert ist, in von der Kamera 23 erzeugten Abbildungen 73 der Hintergrund-Wiedergabeeinrichtung 15 zu einem sogenannten Tearing-Effekt kommen, wenn die Aktualisierungszeitpunkte 61 zeitlich in das Belichtungsfensters B des Bildsensors 1 bzw. des lichtempfindlichen Elements 29, beispielsweise eines Films, der Kamera 23 fallen.

Wie Fig. 6B zeigt, kann sich ein solcher Tearing-Effekt insbesondere darin niederschlagen, dass in der von der Kamera 23 erzeugten Abbildung 73 in einen ersten Bereich 73a eine erste Darstellung 19a des virtuellen Hintergrunds 21 abgebildet ist, während nach einer in das Belichtungsfenster W fallenden Änderung 63 der Darstellung 19 des virtuellen Hintergrunds 21 in einem Bereich 73b der Abbildung 73 bereits die darauffolgende Darstellung 19b des virtuellen Hintergrunds 21 abgebildet wird, wobei die Darstellung 19b hier beispielhaft gegenüber der Darstellung 19a verschoben dargestellt ist. Die Abbildung 73 kann insofern als in die Bereiche 73a und 73b zerrissen wahrgenommen werden.

Um auch diesen Effekt zu vermeiden, kann es vorgesehen sein, die Belichtungspausen Q der Kamera 23 in Abhängigkeit von den Aktualisierungszeitpunkten 61 der Hintergrund-Wiedergabeeinrichtung 15 oder die Aktualisierungszeitpunkte 61 der Hintergrund-Wiedergabeeinrichtung 15 in Abhängigkeit von den Belichtungspausen Q der Kamera 23 derart einzustellen, dass eine jeweilige Änderung 63 der Darstellung 19 des virtuellen Hintergrunds 21 während einer Belichtungspause Q der Kamera 23 erfolgt. Dies ist anhand von Fig. 7A veranschaulicht.

Insbesondere kann es dazu vorgesehen sein, dass die Schnittstelle 103 der Hintergrund-Wiedergabeeinrichtung 15 dazu ausgebildet ist, eine Information I über die Belichtungspausen Q von der Kamera 23 zu empfangen, wobei die Steuereinrichtung 37 der Hintergrund-Wiedergabeeinrichtung 15 dazu ausgebildet sein kann, die Aktualisierungszeitpunkte 61 in Abhängigkeit von der empfangenen Information I über die Belichtungspausen Q der zugeordneten Kamera 23 einzustellen und insbesondere derart einzustellen, dass die Aktualisierungszeitpunkte 61 zeitlich innerhalb der Belichtungspausen Q verortet sind. Dazu kann die Information I über die Belichtungspausen Q beispielsweise den Beginn oder den Beginn und die Dauer wenigstens einer Belichtungspause Q repräsentieren. Insofern kann die Information I beispielsweise einen konkreten Zeitpunkt einer jeweiligen Belichtungspause Q und/oder die Bildaufnahmefrequenz F umfassen, so dass die folgenden Belichtungspausen Q anhand des Zeitpunkts einer ersten Belichtungspause Q ermittelt werden können. Zudem kann die Information I eine Phasenlage der Belichtungspause Q sowie die Bildaufnahmefrequenz F umfassen, so dass wiederum die zeitliche Lage der aufeinanderfolgenden Belichtungspausen Q, welche ebenfalls mit der Bildaufnahmefrequenz F wiederholt werden können, ermittelt werden kann. Zudem kann die Information I eine Information über die Belichtungszeit E und/oder eine Dauer des Belichtungsfensters W umfassen, um die Belichtungspause Q als ein zwischen zwei aufeinanderfolgenden Belichtungsfenstern W liegendes Zeitfenster bestimmen zu können. Indem die Steuereinrichtung 37 die Aktualisierungszeitpunkte 61 somit gewissermaßen in die Belichtungspausen Q der Kamera 23 verlegen kann, kann ein Tearing-Effekt in der von der Kamera 23 erzeugten Abbildung 73 vermieden und erreicht werden, dass sämtliche Zeilen 14 des Bildsensors 1 bzw. sämtliche Bereiche 30a und 30b des lichtempfindlichen Elements 29 der Kamera 23 dieselbe Darstellung 19 registrieren (vgl. Fig. 7B).

Alternativ zu einer Einstellung der Aktualisierungszeitpunkte 61 an der Hintergrund-Wiedergabeeinrichtung 15 kann es auch vorgesehen sein, dass die Schnittstelle 101 der Kamera 23 dazu ausgebildet ist, eine Information I über die Aktualisierungszeitpunkte 61 der Hintergrund-Wiedergabeeinrichtung 15 zu empfangen. Dementsprechend kann die Steuereinrichtung 25 der Kamera 23 dazu ausgebildet sein, in Abhängigkeit von der empfangenen Information I über die Aktualisierungszeitpunkte 61 die Belichtungspausen Q der Kamera 23 einzustellen. Beispielsweise kann die Steuereinrichtung 25 der Kamera 23 dazu ausgebildet sein, eine Phasenlage der Belichtungspausen Q innerhalb der Bildaufnahmezeit D derart festzulegen, dass die Belichtungspause Q zeitlich mit dem Aktualisierungszeitpunkt 61 überlappt. Durch Synchronisieren der Bildaufnahmefrequenz F der Kamera 23 und der Aktualisierungsfrequenz A der Hintergrund-Wiedergabeeinrichtung 15 kann sodann erreicht werden, dass sämtliche Aktualisierungszeitpunkte 61 der Hintergrund-Wiedergabeeinrichtung 15 in jeweiligen Belichtungspausen Q der Kamera 23 fallen. Dementsprechend kann auch durch eine solche Steuerung der Kamera 23 ein Tearing-Effekt vermieden werden.

Um eine zuverlässige Synchronisation zwischen der zeitlichen Steuerung der Hintergrund-Wiedergabeeinrichtung 15 und den Belichtungszeiten E der Kamera 23 zu erreichen, kann es insbesondere vorgesehen sein, dass die Kamera 23 und die Hintergrund-Wiedergabeeinrichtung 15 über ein Netzwerk miteinander verknüpft sind. Eine solche Verknüpfung kann es beispielsweise ermöglichen, Zeitsignale der Kamera 23 und der Hintergrund-Wiedergabeeinrichtung 15 über ein entsprechendes Netzwerk-Protokoll, etwa PTP (Precision Time Protocol), miteinander zu synchronisieren, um insbesondere die Aktualisierungszeitpunkte A der Hintergrund-Wiedergabeeinrichtung 15 zuverlässig in zeitlichen Überlapp mit Belichtungspausen Q der Kamera 23 bringen zu können.

### Bezugszeichenliste

- 1: Bildsensor
- 3: Zeilenadressierlogik
- 4: Spaltenverstärker
- 6: Zeilenauswahlleitung
- 10: Aufnahmesystem
- 11: Hintergrundwiedergabesystem
- 13: Bildaufnahmestudio
- 14: Zeile
- 15: Hintergrund-Wiedergabeeinrichtung
- 16: Spalte
- 17: reales Motiv, Schauspieler
- 18: Spaltenleitung
- 19: Darstellung
- 19a: Darstellung
- 19b: Darstellung
- 21: virtueller Hintergrund
- 23: Kamera
- 25: Steuereinrichtung
- 27: rollierender Objektivverschluss
- 28: Öffnung
- 29: lichtempfindliches Element
- 30: Bereich
- 30a: Bereich
- 31: Beleuchtungseinrichtung
- 33: LED-Wand
- 35: Bildpunktelement
- 37: Steuereinrichtung
- 39: Speicher
- 41: Paneel
- 43: dreidimensionale Szene
- 44: Leuchtdiode
- 47: Speicher
- 49: Wiedergabeeinrichtung
- 51: Eingabeeinrichtung
- 53: Kamerakörper
- 54: Pixel
- 55: lichtempfindliches Sensorelement
- 59: Kameraobjektiv, Wechselobjektiv
- 61: Aktualisierungszeitpunkt
- 63: Änderung der Darstellung
- 65: Lichtpuls
- 73: Abbildung
- 73a: Bereich der Abbildung
- 73b: Bereich der Abbildung
- 79: Sucher
- 81: Objektivring
- 83: Objektiv-Stellmotor
- 85: Objektivring-Antriebseinheit
- 87: Haltestange
- 91: erstes Objekt
- 92: zweites Objekt
- 93: drittes Objekt
- 94: viertes Objekt
- 97: Ausleseschaltung
- 99: Signalausgang
- 101: Schnittstelle
- 103: Schnittstelle
- 105: Pfeil
- A: Aktualisierungsfrequenz
- B: Bilddatensatz
- C: Auslesen
- D: Bildaufnahmezeit
- E: Belichtungszeit
- F: Bildaufnahmefrequenz
- I: Information
- P: Lichtpulsfrequenz
- L: Lichtpulsdauer
- W: Belichtungsfenster
- Q: Belichtungspause
- S: Belichten
- t: Zeit
- R: Zurücksetzen

## Patentansprüche

1. Hintergrund-Wiedergabeeinrichtung (15) für ein virtuelles Bildaufnahmestudio (13), welche dazu ausgebildet ist, hinter einem realen Motiv (17) eine Darstellung (19) eines virtuellen Hintergrunds (21) für eine Aufnahme mittels einer zugeordneten Kamera (23) wiederzugeben,
wobei die Hintergrund-Wiedergabeeinrichtung (15) eine Steuereinrichtung (37) aufweist, welche dazu ausgebildet ist, die Darstellung (19) des virtuellen Hintergrunds (21) zu einstellbaren Aktualisierungszeitpunkten (61) zu ändern,
wobei die Steuereinrichtung (37) dazu ausgebildet ist, die Darstellung (19) des virtuellen Hintergrunds (21) mit einer vorgegebenen und/oder einstellbaren Aktualisierungsfrequenz (A) zu ändern, welche einer Bildaufnahmefrequenz (F) der zugeordneten Kamera (23) oder einem ganzzahligen Anteil der Bildaufnahmefrequenz (F) der zugeordneten Kamera (23) entspricht,
**dadurch gekennzeichnet, dass**
die Hintergrund-Wiedergabeeinrichtung (15) eine Schnittstelle (103) aufweist, welche dazu ausgebildet ist, eine Information (I) über Belichtungspausen (Q) zwischen aufeinander folgenden Belichtungen der zugeordneten Kamera (23) zu empfangen,
wobei die Steuereinrichtung (37) dazu ausgebildet ist, die Aktualisierungszeitpunkte (61) der Hintergrund-Wiedergabeeinrichtung (15) in Abhängigkeit von der empfangenen Information (I) über die Belichtungspausen (Q) der zugeordneten Kamera (23) einzustellen, und
wobei die Steuereinrichtung (37) dazu ausgebildet ist, die Aktualisierungszeitpunkte (61) derart einzustellen, dass eine jeweilige Änderung der Darstellung (19) des virtuellen Hintergrunds (21) während einer Belichtungspause (Q) der zugeordneten Kamera (23) erfolgt.

2. Hintergrund-Wiedergabeeinrichtung (15) nach Anspruch 1,
wobei die empfangene Information (I) über die Belichtungspausen (Q) der zugeordneten Kamera (23) den Beginn, oder den Beginn und die Dauer, wenigstens einer Belichtungspause (Q) repräsentiert.

3. Hintergrund-Wiedergabeeinrichtung (15) nach Anspruch 1 oder 2,
wobei die Steuereinrichtung (37) mit einem Speicher (39) verbunden ist, in welchem zumindest eine nächste Darstellung (19b) des virtuellen Hintergrunds (21) gespeichert ist, wobei die Steuereinrichtung (37) dazu ausgebildet ist, zum Verändern der Darstellung (19) des virtuellen Hintergrunds (21) die gespeicherte nächste Darstellung (19b) wiederzugeben.

4. Hintergrund-Wiedergabeeinrichtung (15) nach einem der vorhergehenden Ansprüche, wobei die Hintergrund-Wiedergabeeinrichtung (15) eine Vielzahl von aktiv leuchtenden Bildpunktelementen (35), insbesondere Leuchtdioden (44), umfasst, die eine zweidimensionale Anordnung bilden.

5. Kamera (23) für eine Aufnahme einer Darstellung (19) eines virtuellen Hintergrunds (21), die in einem virtuellen Bildaufnahmestudio (13) an einer zugeordneten Hintergrund-Wiedergabeeinrichtung (15) wiedergegeben wird und sich zu Aktualisierungszeitpunkten (61) ändert,
wobei die Kamera (23) eine Steuereinrichtung (25) aufweist, welche dazu ausgebildet ist, die Kamera (23) gemäß einer einstellbaren Belichtungszeit (E) zu steuern,
wobei die Aktualisierungszeitpunkte (61) der Hintergrund-Wiedergabeeinrichtung (15) periodisch durch eine Aktualisierungsfrequenz (A) der Hintergrund-Wiedergabeeinrichtung (15) bestimmt sind, und wobei Belichtungspausen (Q) der Kamera durch eine Bildaufnahmefrequenz (F) der Kamera (23) bestimmt sind,
**dadurch gekennzeichnet, dass**
die Kamera (23) eine Schnittstelle (101) aufweist, welche dazu ausgebildet ist, eine Information (I) über die Aktualisierungszeitpunkte (61) der zugeordneten Hintergrund-Wiedergabeeinrichtung (15) zu empfangen,
wobei die Steuereinrichtung (25) dazu ausgebildet ist, in Abhängigkeit von der empfangenen Information (I) über die Aktualisierungszeitpunkte (61) die Belichtungspausen (Q) der Kamera (23) einzustellen,
wobei die Steuereinrichtung (25) der Kamera (23) dazu ausgebildet ist, die Bildaufnahmefrequenz (F) derart einzustellen, dass die Bildaufnahmefrequenz (F) der Kamera (23) der Aktualisierungsfrequenz (A) der Hintergrund-Wiedergabeeinrichtung (15) oder einem ganzzahligen Vielfachen der Aktualisierungsfrequenz (A) entspricht, und
wobei die Steuereinrichtung (25) dazu ausgebildet ist, die Belichtungspausen (Q) der Kamera (23) derart einzustellen, dass während einer jeweiligen Änderung der Darstellung (19) des virtuellen Hintergrunds (21) eine Belichtungspause (Q) der Kamera (23) erfolgt.

6. Kamera (23) nach Anspruch 5,
wobei die Belichtungspausen (Q) direkt oder indirekt mittels der Steuereinrichtung (25) derart einstellbar sind, dass der Zeitpunkt und die Dauer einer jeweiligen Belichtungspause (Q) festgelegt und mit den Aktualisierungszeitpunkten (61) der zugeordneten Hintergrund-Wiedergabeeinrichtung (15) synchronisiert ist.

7. Kamera (23) nach Anspruch 5 oder 6,
die Schnittstelle (101) der Kamera (23) dazu ausgebildet ist, die Aktualisierungsfrequenz (A) oder eine Information über die Aktualisierungsfrequenz (A) von der Hintergrund-Wiedergabeeinrichtung (15) zu empfangen.

8. Verfahren zum Wiedergeben einer Darstellung (19) eines virtuellen Hintergrunds (21) mittels einer Hintergrund-Wiedergabeeinrichtung (15), für eine Aufnahme mit einer Kamera (23), in einem virtuellen Bildaufnahmestudio (13), wobei insbesondere eine Hintergrund-Wiedergabeeinrichtung nach einem der Ansprüche 1 bis 4 und/ oder eine Kamera nach einem der Ansprüche 5 bis 7 verwendet wird, wobei die Darstellung (19) zu Aktualisierungszeitpunkten (61) geändert und gemäß einer jeweiligen Belichtung der Kamera (23) aufgenommen wird,
**gekennzeichnet durch** die Schritte:
Synchronisieren einer Aktualisierungsfrequenz (A) der Hintergrund-Wiedergabeeinrichtung (15), mit welcher die Hintergrund-Wiedergabeeinrichtung (15) die Darstellung (19) des virtuellen Hintergrunds (21) verändert, und einer Bildaufnahmefrequenz (F) der Kamera (23) derart, dass die Bildaufnahmefrequenz (F) der Aktualisierungsfrequenz (A) oder einem ganzzahligen Vielfachen der Aktualisierungsfrequenz (A) entspricht,
Einstellen von Belichtungspausen (Q) der Kamera (23) zwischen aufeinander folgenden Belichtungen in Abhängigkeit von den Aktualisierungszeitpunkten (61) der Hintergrund-Wiedergabeeinrichtung (15) oder Einstellen der Aktualisierungszeitpunkte (61) der Hintergrund-Wiedergabeeinrichtung (15) in Abhängigkeit von Belichtungspausen (Q) der Kamera (23) zwischen aufeinander folgenden Belichtungen derart, dass eine jeweilige Änderung der Darstellung (19) des virtuellen Hintergrunds (21) während einer Belichtungspause (Q) der Kamera (23) erfolgt.

## Claims

1. A background display device (15) for a virtual image recording studio (13) that is configured to display, behind a real subject (17), a representation (19) of a virtual background (21) for a recording by means of an associated camera (23),
wherein the background display device (15) has a control device (37) which is configured to change the representation (19) of the virtual background (21) at settable refresh times (61),
wherein the control device (15) is configured to change the representation (19) of the virtual background (21) at a predefined and/or settable refresh rate (A) which corresponds to a frame rate (F) of the associated camera (23) or to an integer share of the frame rate (F) of the associated camera (23),
**characterized in that**
the background display device (15) has an interface (103) which is configured to receive information (I) about exposure pauses (Q) between consecutive exposures of the associated camera (23),
wherein the control device (37) is configured to set the refresh times (61) of the background display device (15) in dependence on the received information (I) about the exposure pauses (Q) of the associated camera (23), and
wherein the control device (37) is configured to set the refresh times (61) such that a respective change of the representation (19) of the virtual background (21) takes place during an exposure pause (Q) of the associated camera (23).

2. A background display device (15) according to claim 1,
wherein the received information (I) about the exposure pauses (Q) of the associated camera (23) represents the start, or the start and the duration, of at least one exposure pause (Q).

3. A background display device (15) according to claim 1 or 2,
wherein the control device (37) is connected to a memory (39) in which at least one next representation (19b) of the virtual background (21) is stored, wherein the control device (37) is configured to display the stored next representation (19b) in order to change the representation (19) of the virtual background (21).

4. A background display device (15) according to any one of the preceding claims,
wherein the background display device (15) comprises a plurality of actively illuminating picture elements (35), in particular light-emitting diodes (44), that form a two-dimensional arrangement.

5. A camera (23) for a recording of a representation (19) of a virtual background (21) that is displayed in a virtual image recording studio (13) on an associated background display device (15) and that changes at refresh times (61),
wherein the camera (23) has a control device (25) which is configured to control the camera (23) in accordance with a settable exposure time (E), wherein the refresh times (61) of the background display device (15) are periodically determined by a refresh rate (A) of the background display device (15), and wherein exposure pauses (Q) of the camera are determined by a frame rate (F) of the camera (23),
**characterized in that**
the camera (23) has an interface (101) which is configured to receive information (I) about the refresh times (61) of the associated background display device (15),
wherein the control device (25) is configured to set the exposure pauses (Q) of the camera (23) in dependence on the received information (I) about the refresh times (61),
wherein the control device (25) of the camera (23) is configured to set the frame rate (F) such that the frame rate (F) of the camera (23) corresponds to the refresh rate (A) of the background display device (15) or to an integer multiple of the refresh rate (A), and
wherein the control device (25) is configured to set the exposure pauses (Q) of the camera (23) such that an exposure pause (Q) of the camera (23) takes place during a respective change of the representation (19) of the virtual background (21).

6. A camera (23) according to claim 5,
wherein the exposure pauses (Q) can be directly or indirectly settable by means of the control device (25) such that the point in time and the duration of a respective exposure pause (Q) are defined and are synchronized with the refresh times (61) of the associated background display device (15).

7. A camera (23) according to claim 5 or 6,
wherein the interface (101) of the camera (23) is configured to receive the refresh rate (A) or information about the refresh rate (A) from the background display device (15).

8. A method of displaying a representation (19) of a virtual background (21) by means of a background display device (15) for a recording by a camera (23) in a virtual image recording studio (13), wherein in particular a background display device (15) according to any one of the claims 1 to 4 and/or a camera according to any one of the claims 5 to 7 is used, wherein the representation (19) is changed at refresh times (61) and is recorded in accordance with a respective exposure of the camera (23),
**characterized by** the steps:
synchronizing a refresh rate (A) of the background display device (15) at which the background display device (15) changes the representation (19) of the virtual background (21) and a frame rate (F) of the camera (23) such that the frame rate (F) corresponds to the refresh rate (A) or to an integer multiple of the refresh rate (A),
setting exposure pauses (Q) of the camera (23) between consecutive exposures in dependence on the refresh times (61) of the background display device (15) or setting the refresh times (61) of the background display device (15) in dependence on exposure pauses (Q) of the camera (23) between consecutive exposures such that a respective change of the representation (19) of the virtual background (21) takes place during an exposure pause (Q) of the camera (23).

## Revendications

1. Dispositif de reproduction d'arrière-plan (15) pour un studio de prise de vue virtuel (13), qui est conçu pour reproduire une représentation (19) d'un arrière-plan virtuel (21) derrière un sujet réel (17) pour une prise de vue au moyen d'une caméra associée (23),
dans lequel
le dispositif de reproduction d'arrière-plan (15) comprend un dispositif de commande (37) conçu pour modifier la représentation (19) de l'arrière-plan virtuel (21) à des instants de mise à jour ajustables (61),
le dispositif de commande (37) est conçu pour modifier la représentation (19) de l'arrière-plan virtuel (21) à une fréquence de mise à jour (A) prédéterminée et/ou ajustable qui correspond à une fréquence de prise de vue (F) de la caméra associée (23) ou à une part entière de la fréquence de prise de vue (F) de la caméra associée (23),
**caractérisé en ce que**
le dispositif de reproduction d'arrière-plan (15) comprend une interface (103) conçue pour recevoir une information (I) relative aux pauses d'exposition (Q) entre les expositions successives de la caméra associée (23),
sachant que
le dispositif de commande (37) est conçu pour ajuster les instants de mise à jour (61) du dispositif de reproduction d'arrière-plan (15) en fonction de l'information reçue (I) relative aux pauses d'exposition (Q) de la caméra associée (23), et
le dispositif de commande (37) est conçu pour ajuster les instants de mise à jour (61) de telle sorte qu'une modification respective de la représentation (19) de l'arrière-plan virtuel (21) se produise pendant une pause d'exposition (Q) de la caméra associée (23).

2. Dispositif de reproduction d'arrière-plan (15) selon la revendication 1,
dans lequel
l'information reçue (I) relative aux pauses d'exposition (Q) de la caméra associée (23) représente le début, ou le début et la durée, d'au moins une pause d'exposition (Q).

3. Dispositif de reproduction d'arrière-plan (15) selon la revendication 1 ou 2,
dans lequel
le dispositif de commande (37) est connecté à une mémoire (39) dans laquelle est stockée au moins une représentation suivante (19b) de l'arrière-plan virtuel (21),
le dispositif de commande (37) est conçu pour reproduire la représentation suivante (19b) stockée afin de modifier la représentation (19) de l'arrière-plan virtuel (21).

4. Dispositif de reproduction d'arrière-plan (15) selon l'une des revendications précédentes,
dans lequel
le dispositif de reproduction d'arrière-plan (15) comprend une pluralité de pixels lumineux actifs (35), en particulier des diodes électroluminescentes (44), qui forment un agencement bidimensionnel.

5. Caméra (23) pour une prise de vue d'une représentation (19) d'un arrière-plan virtuel (21), qui est reproduite dans un studio de prise de vue virtuel (13) sur un dispositif de reproduction d'arrière-plan associé (15) et qui se modifie à des instants de mise à jour (61),
dans laquelle
la caméra (23) comprend un dispositif de commande (25) conçu pour commander la caméra (23) selon un temps d'exposition ajustable (E), les instants de mise à jour (61) du dispositif de reproduction d'arrière-plan (15) sont définis périodiquement par une fréquence de mise à jour (A) du dispositif de reproduction d'arrière-plan (15), et
les pauses d'exposition (Q) de la caméra sont définies par une fréquence de prise de vue (F) de la caméra (23),
**caractérisée en ce que**
la caméra (23) comprend une interface (101) conçue pour recevoir une information (I) relative aux instants de mise à jour (61) du dispositif de reproduction d'arrière-plan (15) associé,
le dispositif de commande (25) est conçu pour ajuster les pauses d'exposition (Q) de la caméra (23) en fonction de l'information reçue (I) relative aux instants de mise à jour (61),
le dispositif de commande (25) de la caméra (23) est conçu pour ajuster la fréquence de prise de vue (F) de telle sorte que la fréquence de prise de vue (F) de la caméra (23) corresponde à la fréquence de mise à jour (A) du dispositif de reproduction d'arrière-plan (15) ou à un multiple entier de la fréquence de mise à jour (A), et
le dispositif de commande (25) est conçu pour ajuster les pauses d'exposition (Q) de la caméra (23) de telle sorte qu'une pause d'exposition (Q) de la caméra (23) se produise pendant une modification respective de la représentation (19) de l'arrière-plan virtuel (21).

6. Caméra (23) selon la revendication 5,
dans laquelle
les pauses d'exposition (Q) peuvent être ajustées directement ou indirectement au moyen du dispositif de commande (25) de telle sorte que l'instant et la durée d'une pause d'exposition respective (Q) soient fixes et synchronisés avec les instants de mise à jour (61) du dispositif de reproduction d'arrière-plan associé (15).

7. Caméra (23) selon la revendication 5 ou 6,
dans laquelle
l'interface (101) de la caméra (23) est conçue pour recevoir la fréquence de mise à jour (A) ou une information relative à la fréquence de mise à jour (A) depuis le dispositif de reproduction d'arrière-plan (15).

8. Procédé de reproduction d'une représentation (19) d'un arrière-plan virtuel (21) au moyen d'un dispositif de reproduction d'arrière-plan (15) pour une prise de vue avec une caméra (23) dans un studio de prise de vue virtuel (13), utilisant en particulier un dispositif de reproduction d'arrière-plan selon l'une des revendications 1 à 4 et/ou une caméra selon l'une des revendications 5 à 7,
dans lequel
la représentation (19) est modifiée à des instants de mise à jour (61) et enregistrée conformément à une exposition respective de la caméra (23), **caractérisé par** les étapes consistant à :
synchroniser une fréquence de mise à jour (A) du dispositif de reproduction d'arrière-plan (15), à laquelle le dispositif de reproduction d'arrière-plan (15) modifie la représentation (19) de l'arrière-plan virtuel (21), et une fréquence de prise de vue (F) de la caméra (23) de telle sorte que la fréquence de prise de vue (F) corresponde à la fréquence de mise à jour (A) ou à un multiple entier de la fréquence de mise à jour (A),
ajuster des pauses d'exposition (Q) de la caméra (23) entre les expositions successives en fonction des instants de mise à jour (61) du dispositif de reproduction d'arrière-plan (15), ou ajuster des instants de mise à jour (61) du dispositif de reproduction d'arrière-plan (15) en fonction des pauses d'exposition (Q) de la caméra (23) entre les expositions successives de telle sorte qu'une modification respective de la représentation (19) de l'arrière-plan virtuel (21) se produise pendant une pause d'exposition (Q) de la caméra (23).
